# EUROPEAN PATENT APPLICATION

(11) **EP 4 749 462 A1**
(43) Date of publication of application: **27.05.2026**
(21) Application number: 24892901.0
(22) Date of filing: 09.08.2024
(51) Int. Cl.: G06F 11/14

(54) **DATA BACKUP METHOD, ELECTRONIC DEVICE, STORAGE MEDIUM, AND CHIP**

(30) Priority: 23.11.2023 CN 202311582119
(71) Applicant: Honor Device Co., Ltd., Shenzhen, Guangdong 518040 (CN)
(72) Inventor: LIU, Fucheng, Shenzhen, Guangdong 518040 (CN); YE, Kaihe, Shenzhen, Guangdong 518040 (CN); WAN, Xing, Shenzhen, Guangdong 518040 (CN); ZHANG, Ze, Shenzhen, Guangdong 518040 (CN)
(74) Representative: Goddar, Heinz J.
(86) International application number: PCT/CN2024/111214
(87) International publication number: WO 2025/107737

(57) **Abstract**

This application provides a data backup method, an electronic device, a storage medium, and a chip, and relates to the field of data backup technologies. According to the method, in a current backup, a file list in a previous backup is obtained, the local file list in the previous backup is compared with a local file list in the current backup, to find an added file and a modified file, the added file and the modified file are uploaded to a cloud server for backup, and an identical file is not repeatedly uploaded to the cloud server for backup. When the added file and the modified file are backed up, different processing manners may be used for a regular file, a small file, and a large file: A modified large file is split into a plurality of data chunks, those differential data chunks are backed up, and same data chunks are no longer backed up. Small files are uploaded through packaging. If a reuse rate of files in one package is greater than 90%, backup is not needed; and if the reuse rate is less than 90%, uploading is performed through repackaging. This method can reduce backup time and improve backup efficiency.

## Description

This application claims priority to Chinese Patent Application No. 202311582119.X, filed with the China National Intellectual Property Administration on November 23, 2023 and entitled "DATA BACKUP METHOD, ELECTRONIC DEVICE, STORAGE MEDIUM, AND CHIP", which is incorporated herein by reference in its entirety.

### TECHNICAL FIELD

This application relates to the field of data backup technologies, and in particular, to a data backup method, an electronic device, a storage medium, and a chip.

### BACKGROUND

Data backup is a process of backing up data in an electronic device to another electronic device, another storage medium, or a server. The process of backing up data to the server may also be referred to as cloud backup of the data. Because storage space of the server is larger, current data backup is mainly cloud backup. The electronic device may back up data in the same electronic device for multiple times. Currently, in each backup, all data in an electronic device that is to be backed up is backed up to a cloud server. Therefore, a data volume during the backup is large, and backup time is long, affecting backup efficiency.

### SUMMARY

This application provides a data backup method, an electronic device, a storage medium, and a chip, to reduce backup time and improve backup efficiency.

To achieve the foregoing objectives, according to a first aspect of this application, a data backup method is provided, including:

An electronic device generates a first file list based on attribute information of a directory file in a current backup. The electronic device obtains a second file list in a previous backup, where the second file list includes the attribute information of the directory file in the previous backup. The electronic device obtains a synchronization type of differential files in the directory file based on the first file list and the second file list, where the synchronization type includes: added and/or modified. The electronic device sends the differential files to a cloud server.

According to the method, in the current backup, the file list in the previous backup is obtained, the local file list in the previous backup is compared with the local file list in the current backup, to find an added file and a modified file, the added file and the modified file are uploaded to the cloud server for backup, and an identical file is not repeatedly uploaded to the cloud server for backup. This reduces a data volume and improves backup efficiency.

With reference to the method provided in the first aspect, in some embodiments, the attribute information includes a file type, and the file type includes a large file type. That the electronic device obtains a synchronization type of differential files in the directory file based on the first file list and the second file list further includes: The electronic device searches the second file list for a first large file whose file type is the large file type. For each first large file, if the electronic device finds, in the first file list, a second large file that has same first attribute information but different second attribute information compared to the first large file, a synchronization type of the second large file is determined as modified. For each first large file, if the electronic device finds, in the first file list, a third large file that has same first attribute information and same second attribute information compared to the first large file, a synchronization type of the third large file is determined as identical. The electronic device determines a synchronization type of a fourth large file in the first file list as added, where the synchronization type is a synchronization type other than modified and identical, the differential files include a modified large file and an added large file, the modified large file is a large file whose synchronization type is modified, and the added large file is a large file whose synchronization type is added.

With reference to the method provided in the first aspect, in some embodiments, the first attribute information includes a file ID and a file path; and the second attribute information includes a hash value.

With reference to the method provided in the first aspect, in some embodiments, the differential files include an added large file, and that the electronic device sends the differential files to a cloud server includes: The electronic device splits the added large file, to obtain a plurality of data chunks of the added large file. The electronic device sends the plurality of data chunks of the added large file to the cloud server.

With reference to the method provided in the first aspect, in some embodiments, the differential files include a modified large file, and that the electronic device sends the differential files to a cloud server includes: The electronic device splits the modified large file, to obtain a first set including a plurality of first data chunks. The electronic device obtains, from the second file list, a fifth large file that has same first attribute information compared to the modified large file, where the first large file includes the fifth large file. The electronic device obtains, from the second file list, a second set including a plurality of second data chunks of the fifth large file. The electronic device compares the first data chunks in the first set with the second data chunks in the second set, to obtain differential data chunks of the modified large file, where the differential data chunks include a modified data chunk and an added data chunk. The electronic device sends the differential data chunks of the modified large file to the cloud server.

With reference to the method provided in the first aspect, in some embodiments, that the electronic device splits the modified large file, to obtain a first set including a plurality of first data chunks includes: The electronic device searches for a specific character in the modified large file. The electronic device splits the modified large file at a position corresponding to the specific character, to obtain the first set including the plurality of first data chunks.

With reference to the method provided in the first aspect, in some embodiments, the attribute information includes a file type, the file type includes a small file type, and the attribute information further includes a tar package in which each small file is located. That the electronic device compares the first file list with the second file list, to obtain a synchronization type of differential files in the directory file includes: The electronic device compares the first file list with the second file list, to obtain a changed tar package and a first added small file. The electronic device calculates a reuse rate of small files in the changed tar package. For a first changed tar package whose reuse rate is greater than a reuse threshold, a small file that is not reused in the first changed tar package is used as a second added small file. For a second changed tar package whose reuse rate is less than or equal to the reuse threshold, a reused small file and a modified small file in the second changed tar package is used as a third added small file. The differential files include the first added small file, the second added small file, and the third added small file.

With reference to the method provided in the first aspect, in some embodiments, that the electronic device sends the differential files to a cloud server includes: The electronic device packages the first added small file, the second added small file, and the third added small file into at least one new tar package according to a packaging rule. The electronic device sends the new tar package to the cloud server, where a data volume of the new tar package is less than a data volume threshold.

With reference to the method provided in the first aspect, in some embodiments, a quantity of the small files in the changed tar package in the second file list is a first quantity; and a quantity of reused small files in the first file list is a second quantity. The reuse rate of the small files in the changed tar package is a ratio of the second quantity to the first quantity.

With reference to the method provided in the first aspect, in some embodiments, a data volume of the small files in the changed tar package in the second file list is a first data volume; and a data volume of a first small file that is reused in the first file list is a second data volume. The reuse rate of the small files in the changed tar package is a ratio of the second data volume to the first data volume.

With reference to the method provided in the first aspect, in some embodiments, first small files that are reused are small files having same first attribute information and same second attribute information, small files that are not reused are small files having same first attribute information but different second attribute information, the first attribute information includes: a filename and the file path, and the second attribute information includes the hash value.

With reference to the method provided in the first aspect, in some embodiments, the attribute information includes a file type, and the file type includes a regular file type. That the electronic device compares the first file list with the second file list, to obtain a synchronization type of differential files in the directory file includes: The electronic device searches the second file list for a first regular file whose file type is the regular file type. For each first regular file, if the electronic device finds, in the first file list, a second regular file that has same first attribute information but different second attribute information compared to the first regular file, the second regular file is determined as a modified regular file. For each first regular file, if the electronic device finds, in the first file list, a third regular file that has same first attribute information and same second attribute information compared to the first regular file, the third regular file is determined as an identical regular file. The electronic device determines a synchronization type of a fourth regular file in the first file list as added, where the synchronization type is a synchronization type other than modified and identical, the differential files include a modified regular file and an added regular file, the modified regular file is a regular file whose synchronization type is modified, and the added regular file is a regular file whose synchronization type is added.

With reference to the method provided in the first aspect, in some embodiments, that the electronic device sends the differential files to a cloud server includes: The electronic device sends a creation request for a first file to the cloud server, where the creation request for the first file indicates the cloud server to: return a cloud-side unique identifier of the first file when the cloud server stores the first file, or return information indicating absence of the first file when the cloud server does not store the first file; and the first file is the modified regular file or the added regular file. The electronic device sends the first file to the cloud server if the electronic device receives the information indicating the absence of the first file that is sent by the cloud server. The electronic device does not send the first file to the cloud server if the electronic device receives the cloud-side unique identifier of the first file that is sent by the cloud server.

According to a second aspect, an electronic device is provided, including a processor. The processor is configured to invoke a computer program stored in a memory, to implement the method according to any one of the first aspect of this application.

According to a third aspect, a chip is provided, including a processor. The processor is coupled to a memory. The processor executes a computer program stored in the memory, to implement the method according to any one of the first aspect of this application.

According to a fourth aspect, a computer-readable storage medium is provided. The computer-readable storage medium stores a computer program, and when computer instructions are run on an electronic device, the electronic device is enabled to implement the method according to any one of the first aspect of this application.

According to a fifth aspect, an embodiment of this application provides a computer program product. When the computer program product runs on a device, the device is enabled to perform the method according to any one of the first aspect of this application.

It may be understood that, for beneficial effects of the second aspect to the fifth aspect, refer to the related descriptions in the first aspect. Details are not described herein again.

### BRIEF DESCRIPTION OF DRAWINGS

FIG. 1 is a diagram of a hardware structure of an electronic device according to an embodiment of this application;
FIG. 2 is a diagram of interfaces of a backup application for implementing a cloud backup solution according to an embodiment of this application;
FIG. 3 is a diagram of a technical architecture of a cloud backup method according to an embodiment of this application;
FIG. 4 is a flowchart of a cloud backup method according to an embodiment of this application;
FIG. 5 shows a relationship among application data, application resource files, a data snapshot, application metadata, and the like according to an embodiment of this application;
FIG. 6 is a sequence diagram of a backup preparation phase in a cloud backup solution according to an embodiment of this application;
FIG. 7 is a sequence diagram of a data preparation stage in a cloud backup solution according to an embodiment of this application;
FIG. 8A and FIG. 8B are a sequence diagram of a data upload stage (i.e. uploading data to a cloud) in a cloud backup solution according to an embodiment of this application;
FIG. 9 is a sequence diagram of a backup completion phase in a cloud backup solution according to an embodiment of this application;
FIG. 10 shows backup manners for three types of regular files according to an embodiment of this application;
FIG. 11 shows backup manners for three types of large files according to an embodiment of this application;
FIG. 12 shows backup manners for three types of small files according to an embodiment of this application;
FIG. 13 is a sequence diagram of a data preparation stage in re-backup according to an embodiment of this application;
FIG. 14 is flowchart of determining various types of regular files according to an embodiment of this application;
FIG. 15 is a diagram of large file chunking according to an embodiment of this application;
FIG. 16 is another diagram of large file chunking according to an embodiment of this application;
FIG. 17 is a flowchart of determining categories of small files according to an embodiment of this application;
FIG. 18 is a diagram of determining and packaging small files according to an embodiment of this application;
FIG. 19 is a sequence diagram of uploading a to-be-uploaded file according to an embodiment of this application;
FIG. 20 shows a process of backing up an installation package A and an installation package B according to an embodiment of this application; and
FIG. 21 shows a process of restoring an installation package according to an embodiment of this application.

### DESCRIPTION OF EMBODIMENTS

In the following description, for the purpose of illustration rather than limitation, specific details such as a specific system structure and a technology are proposed, to facilitate a thorough understanding of embodiments of this application. However, a person skilled in the art should be clear that this application may also be implemented in other embodiments without these specific details.

It should be understood that, when being used in the specification and the appended claims of this application, the term "include" indicates presence of a described feature, entirety, step, operation, element, and/or component, but does not exclude presence or addition of one or more other features, entireties, steps, operations, elements, components, and/or sets thereof.

It should be further understood that, in embodiments of this application, "one or more" means one, two, or more than two. The term "and/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects.

In addition, in descriptions of the specification of this application and the appended claims, the terms such as "first", "second", "third", and "fourth" are merely used for distinguishing descriptions, and cannot be understood as an indication or implication of relative importance.

Reference to "one embodiment", "some embodiments", or the like described in the specification of this application means that a specific characteristic, structure, or feature described in combination with this embodiment is included in one or more embodiments of this application. Therefore, statements such as "in an embodiment", "in some embodiments", "in some other embodiments", and "in still some other embodiments" that appear in different parts in this specification do not necessarily refer to a same embodiment, but mean "one or more rather than all of embodiments", unless otherwise specifically emphasized in another manner. The terms "include", "comprise", "have", and variants thereof all mean "including but not limited to", unless otherwise specifically emphasized in another manner.

An embodiment of this application provides a data backup method. The method is applicable to an electronic device, to back up data in the electronic device to a cloud server. The electronic device may be a tablet computer, a mobile phone, a wearable device, a notebook computer, an ultra-mobile personal computer (ultra-mobile personal computer, UMPC), a netbook, a personal digital assistant (personal digital assistant, PDA), or the like. A specific type of the electronic device is not limited in embodiments of this application.

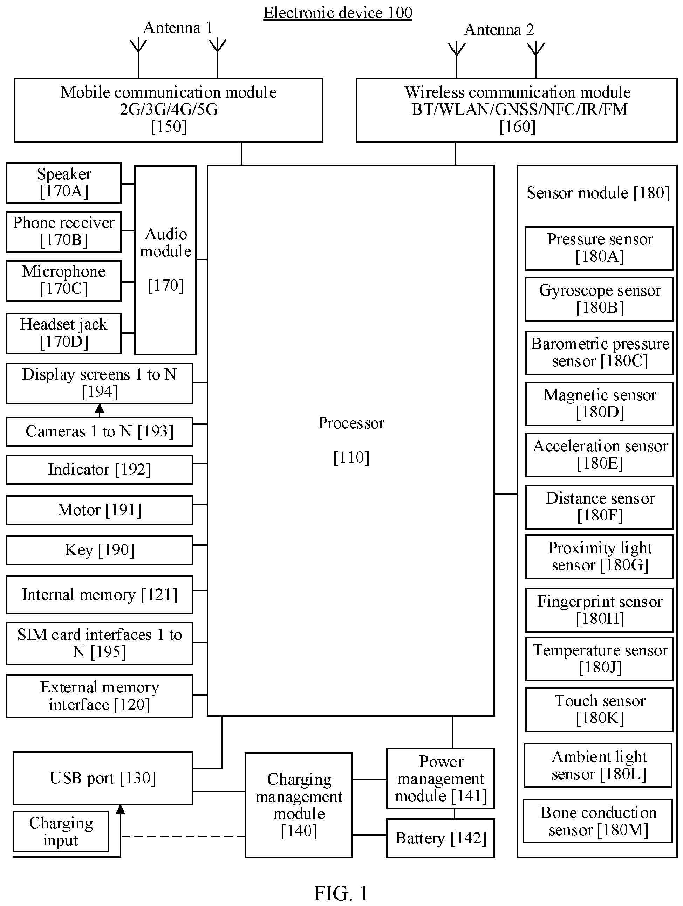

FIG. 1 is a diagram of a structure of an electronic device. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be independent devices, or may be integrated into one or more processors. For example, the processor 110 is configured to perform a cloud backup method in embodiments of this application.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the memory, This avoids repeated access, and reduces waiting time of the processor 110, thereby improving system efficiency.

The internal memory 121 may be configured to store computer-executable program code. The executable program code includes instructions. The processor 110 runs the instructions stored in the internal memory 121, to execute various function applications and data processing of the electronic device 100. The internal memory 121 may include a program storage area and a data storage area.

In addition, the internal memory 121 may include a high-speed random access memory, and may further include a non-volatile memory such as at least one disk storage device, a flash memory device, or a universal flash storage (universal flash storage, UFS). Application data, an application resource index file, and the like in embodiments of this application may all be stored in the internal memory.

The touch sensor 180K is also referred to as a "touch panel". The touch sensor 180K may be disposed in the display screen 194. The touch sensor 180K and the display screen 194 form a touchscreen, which is also referred to as a "touch screen". The touch sensor 180K is configured to detect a touch operation performed on or near the touch sensor. The touch sensor may transfer a detected touch operation to the application processor, to determine a touch event type. A visual output related to a touch operation may be provided through the display screen 194. In some other embodiments, the touch sensor 180K may alternatively be disposed on a surface of the electronic device 100 at a position different from that of the display screen 194. For example, the touch operation is an operation on a cloud backup interface provided in embodiments of this application.

The electronic device 100 implements a display function through the GPU, the display screen 194, the application processor, and the like. The GPU is a microprocessor for image processing and connects the display screen 194 and the application processor. The GPU is configured to perform mathematical and geometric calculation and render graphics. The processor 110 may include one or more GPUs that execute program instructions to generate or change display information.

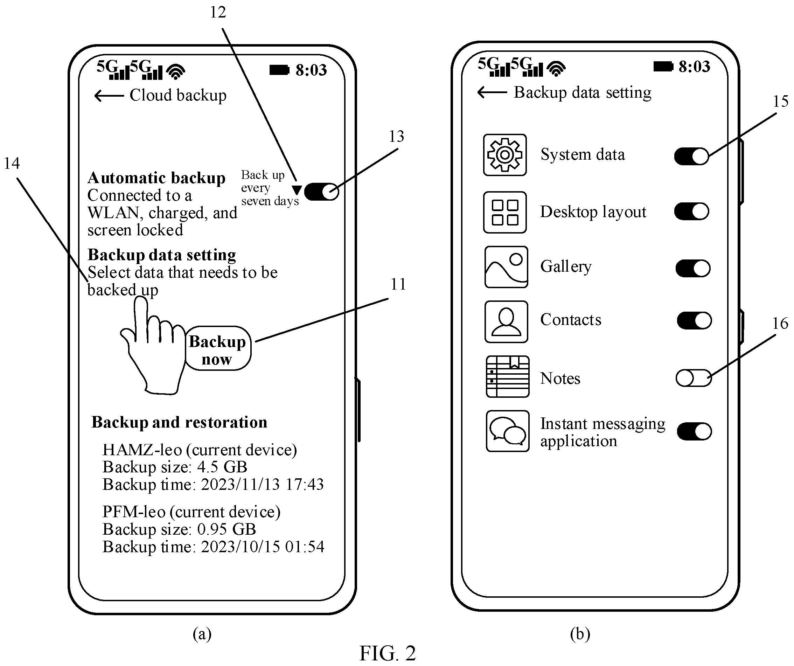

The display screen 194 is configured to display an image, a video, or the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light=emitting diode, AMOLED), a flexible light-emitting diode (flex light-emitting diode, FLED), a Miniled, a MicroLed, a Micro-oLed, a quantum dot light-emitting diode (quantum dot light-emitting diode, QLED), or the like. In some embodiments, the electronic device 100 may include 1 or N display screens 194, where N is a positive integer greater than 1. For example, an interface shown in FIG. 2 in embodiments of this application is displayed by a display.

A specific structure of an execution entity of a data backup method is not specifically limited in embodiments of this application, provided that communication can be performed according to the data backup method provided in embodiments of this application by running code recording the data backup method in embodiments of this application. For example, the execution entity of the data backup method provided in embodiments of this application may be a functional module that can invoke a program and execute the program and that is in an electronic device, or a communication apparatus, for example, a chip, used in an electronic device.

Data backup is a process of backing up data in an electronic device to another electronic device, another storage medium, or a server. The process of backing up data to the server may also be referred to as cloud backup of the data. Because storage space of the server is larger, current data backup is mainly cloud backup. The electronic device may back up data in the same electronic device for multiple times. Currently, in each backup, all data in an electronic device that is to be backed up is backed up to a cloud server. Therefore, a data volume during the backup is large, and backup time is long, affecting backup efficiency.

An embodiment of this application provides a cloud backup solution. When a local device performs an initial backup or a cloud server does not store a historical backup record of a local device (for example, has cleared a backup record of the local device and backup data stored in the cloud server), all data selected by a user is backed up to the cloud server. During backup subsequently, after a local file list of a current backup is generated, the local file list in the current backup is compared with a local file list in a previous backup to obtain some differential files. The differential file is a file other than an identical file. For example, the differential files include: an added file, a modified file, and a deleted file. The deleted file in the differential files does not need to be backed up, the added file in the differential files needs to be backed up, and the modified file in the differential files usually also needs to be backed up. However, the identical file does not need to be backed up. In this way, a large quantity of identical files do not need to be backed up, thereby improving backup efficiency.

To understand a backup procedure in re-backup provided in embodiments of this application more easily, a backup solution provided in embodiments of this application is described first.

FIG. 2 is a diagram of interfaces of a backup application for implementing a backup solution according to an embodiment of this application. A user may implement data backup and restoration through the backup application.

It should be noted that the diagram of the interfaces is merely used for describing the following content: The interfaces may be used for setting a frequency of automatic backup of an electronic device, may be used for selecting data to be backed up, and may further include a backup now control 11. The electronic device may start to perform cloud backup after receiving a click/tap operation corresponding to the backup now control 11 by the user. During actual application, an interface different from those in FIG. 2 may be set, or the foregoing content may be presented through a plurality of interfaces.

During specific implementation, the user may open the backup application through an account center in the electronic device, to display the interface shown in (a) in FIG. 2, may open the interface shown in (a) in FIG. 2 by using an application icon of the backup application displayed on a system desktop of the electronic device, or may open the interface shown in (a) in FIG. 2 in another manner.

The electronic device may automatically enable data backup, and this process may be referred to as automatic backup. In the interface shown in (a) in FIG. 2, the frequency of the automatic backup may be set, for example, backup is performed once every seven days, backup is performed once every three days, or backup is performed once every day. The user may display a plurality of backup frequency options through a control 12 in the interface, and the user selects one of the options to set the frequency of the automatic backup. For example, in FIG. 2, it is set that automatic backup is performed once every seven days. Certainly, during actual application, the user may enable or disable the automatic backup through a control 13. A status of the control 13 shown in the figure is an enabled status of the automatic backup.

In the interface shown in (a) in FIG. 2, the user may further select data to be backed up. The user clicks/taps a backup data setting control 14 shown in (a) in FIG. 2 to enter a backup data setting interface shown in (b) in FIG. 2.

A plurality of data items: system data (for example, system setting, alarm clock setting, and input method setting), a desktop layout, a gallery, contacts, notes, and an instant messaging application are presented on the backup data setting interface. The user may select specific data to be backed up, for example, start a control 15 corresponding to a system data item, indicating that system data needs to be backed up in a backup process; and does not start a control 16 corresponding to a notes item, indicating that data of a notes application does not need to be backed up in the backup process. Refer to FIG. 2. Controls corresponding to the system data, the desktop layout, the gallery, the contacts, and the instant messaging application are all in an enabled status, and the control corresponding to the notes application is in a disabled status. In this case, the electronic device may perform data backup on the system data, and data of the desktop layout, the gallery, the contacts, and the instant messaging application, and does not perform data backup on the data of the notes application. In this example, the system data, and the data of the desktop layout, the gallery, the contacts, and the instant messaging application may also be referred to as data to be backed up that is set by the user. After setting the data to be backed up, the user may trigger, by using a gesture operation, the electronic device to display the interface shown in (a) in FIG. 2.

In the interface shown in (a) in FIG. 2, the user may trigger the electronic device to perform data backup by clicking/tapping the backup now control 11. This process may be referred to as manual backup.

Certainly, the electronic device may alternatively automatically trigger, based on the set frequency of the automatic backup, to back up the data to be backed up that is set by the user.

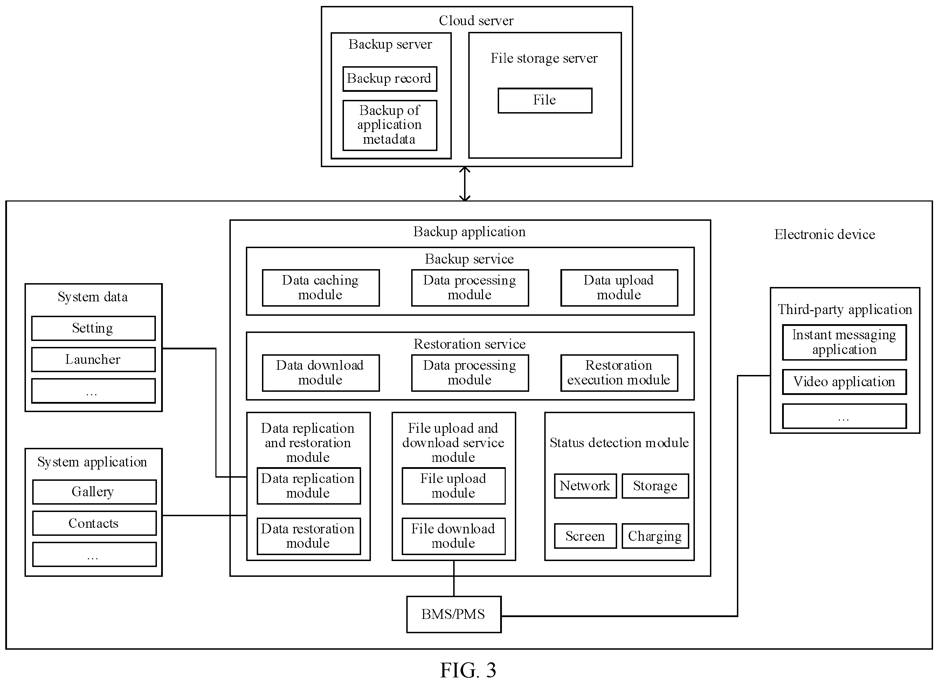

FIG. 3 is a diagram of a technical architecture of a backup method according to an embodiment of this application. The diagram of the technical architecture relates to a cloud server and an electronic device. A backup server and a file storage server may also be deployed on a same server.

The cloud server includes the backup server and the file storage server. The backup server and the file storage server may be two independent servers.

The backup server is configured to store a backup record of each device and application metadata. The backup record records a backup ID, backup time, a backup size, and the like for each device during cloud backup. One device may perform multiple data backups. Therefore, the backup server may also record a backup ID, backup time, a backup size, and the like of each backup when the same device performs multiple data backups. The application metadata records related information of each application in data to be backed up that is set by a user (for specific content, refer to descriptions in subsequent embodiments).

The file storage server is configured to store actual files of each application that are to be backed up, for example, files such as a database, an installation package, audio, a video, a document, and a picture of the application.

During actual application, the backup server is configured to communicate with the electronic device to execute a backup procedure, and the backup server may store an actual file uploaded by the electronic device in the file storage server. In subsequent embodiments of this application, a backup process is uniformly described by using the cloud server.

The electronic device includes a backup application and another application. The backup application is an application used for implementing a backup process, and the another application is an application (for example, a gallery application, a contacts application, and an instant messaging application shown in (b) in FIG. 2) requiring data backup that is set by the user.

The backup application includes a backup service and a restoration service, and some modules (for example, a data replication and restoration module, a file upload/download module, and a status detection module) providing support for the backup service and the restoration service.

The backup service is used for uploading data in the electronic device to the cloud server, and the restoration service is used for downloading data from the cloud server and restoring the data to the electronic device.

The data replication and restoration module includes a data replication module and a data restoration module. The file upload/download module includes a file upload module and a file download module. The status detection module is configured to monitor a network status (for example, whether the electronic device is connected to a wireless local area network), a storage status (for example, whether local storage space is sufficient for caching data to be backed up, and whether the cloud server has sufficient space for backing up data), a screen status (for example, whether the electronic device is in a screen locked status), a charging status (for example, whether a battery level of the electronic device is sufficient, and whether the electronic device is connected to an external power supply), and the like of the electronic device.

The backup service includes a data caching module, a data processing module, and a data upload module. The data caching module is configured to invoke the data replication module to cache data to be backed up. The data processing module is configured to process the data to be backed up that has been cached, for example, assemble small files or split a large file, and generate a data snapshot based on the data to be backed up. The data upload module is configured to invoke the file upload module to upload processed data to the cloud server.

The restoration service includes a data download module, a data processing module, and a restoration execution module. The data download module is configured to invoke the file download module to download data from the cloud server. The data processing module is configured to perform decompression, reassembly, deletion, and the like on the downloaded data. The restoration execution module is configured to restore processed data to an original directory.

Certainly, in the foregoing cloud backup process, system data, a system application, and a third-party application may be backed up. The third-party application needs to be backed up by using a PMS (package manager service) or a BMS (backup manager service) of a Framework layer. The PMS or the BMS may provide a capability of reading a data directory generated during running of a third-party application program.

In addition, during specific implementation, a file scanning rule corresponding to each application (not including the backup application) may be stored in the electronic device. A file scanning rule of one application records a backup directory and a restricted backup directory that correspond to the application. During actual application, the backup service backs up a file in the backup directory to the cloud server; and no longer backs up a file in the restricted backup directory to the cloud server, for example, backs up a chat history of the instant messaging application, and does not back up a log file generated during running of the instant messaging application.

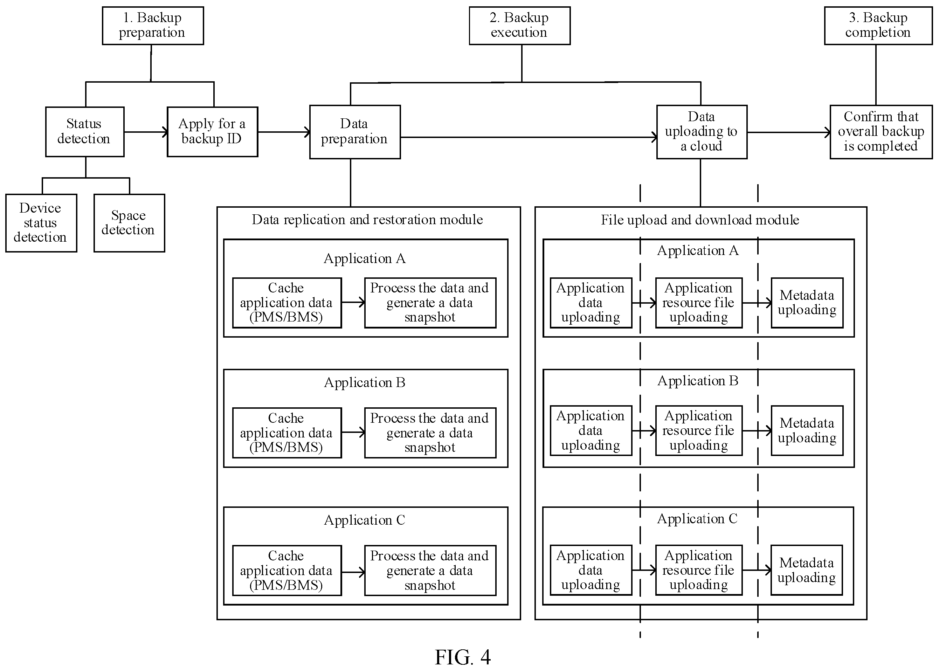

FIG. 4 is a flowchart of a cloud backup method according to an embodiment of this application.

The cloud backup method includes three major phases: a backup preparation phase, a backup execution phase, and a backup completion phase. During the backup preparation phase, environment detection is performed through the status detection module, for example, a status of the electronic device is detected, to detect whether the electronic device satisfies a backup condition. Further, remaining storage space of the electronic device and remaining storage space for a personal account of the cloud server may be detected, to determine whether the remaining storage space of the electronic device is sufficient for caching the data to be backed up, and whether the remaining storage space for the personal account of the cloud server is sufficient for backing up the data. When it is detected that the status of the device satisfies the backup condition and the storage space is sufficient, a backup ID of a current cloud backup of this electronic device is applied from the cloud server.

The backup execution phase includes a data preparation stage and a data upload stage (i.e. uploading data to a cloud). The data upload stage includes an application data (a directory file described above) upload stage, an application resource file upload stage, and a backup completion stage (used for uploading metadata).

First, application data needs to be cached at the data preparation stage, to generate data snapshot (i.e. data preparation) data, and then the application data is uploaded to the cloud server (i.e. data upload). During actual application, when data in a current backup includes data of a plurality of applications (for example, an application A, an application B, and an application C), data needs to be first prepared for one application, and the data of the application is uploaded to the cloud server; and data is prepared for a next application after the data of the previous application is uploaded to the cloud server, and the data of the next application is uploaded to the cloud server. This process is cyclically performed until the data of the plurality of applications is uploaded to the cloud server. Certainly, during actual application, the data of the plurality of applications may alternatively be uploaded to the cloud server sequentially after the data of the plurality of applications is prepared.

In this embodiment of this application, an application A is used as an example to describe a data preparation process and a data upload process. The electronic device reads, by using the PMS or the BMS, a directory of an application that the user selects to back up, caches, in temporary storage space, application data (for example, a chat history, a picture, a video, audio, and a document) read from the directory of the application, and then, performs data processing on the cached application data to generate a data snapshot (for details, refer to the following explanations). After the data snapshot of the application A is generated, the electronic device may upload the application data of the application A to the cloud server (that is, the application data upload stage). After uploading the application data, the electronic device further needs to upload application resource files (for example, the data snapshot, an installation package, and an icon of the application A) to the cloud server (that is, the application resource file upload stage). After uploading the application resource files of the application A is completed, the electronic device may upload metadata (meta) of the application A to the cloud server (that is, a metadata upload stage, i.e. the backup completion stage). The metadata of the application A includes: related information of the data snapshot of the application A, related information of the application installation package, related information of the application icon, and the like. During actual application, a part of the application resource files may be uploaded, and correspondingly, the metadata may alternatively include related information of the part of the application resource files.

During the backup completion phase, after it is confirmed that backup of all the applications (for example, the application A, the application B, and the application C) in the current backup is completed, the overall backup is completed.

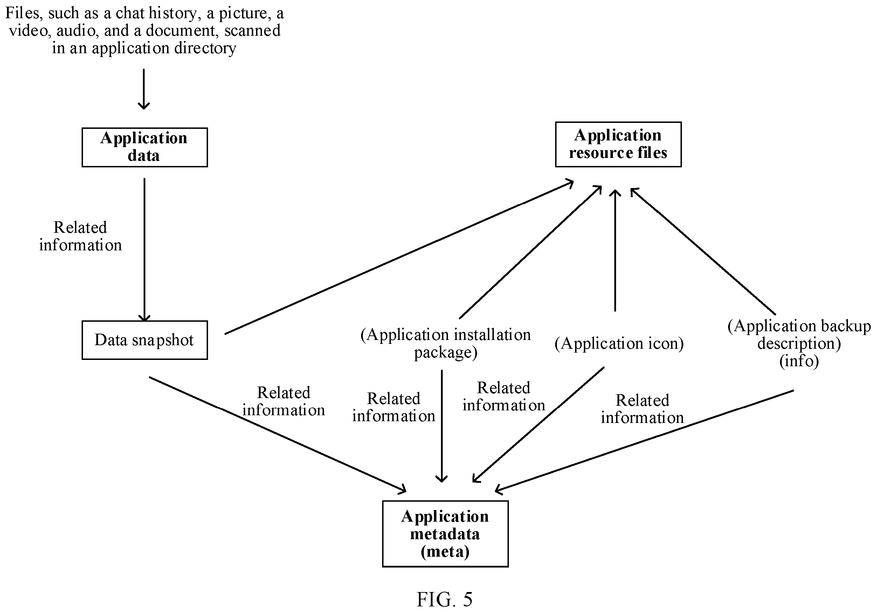

For ease of understanding the technical terms in the foregoing backup execution phase, refer to FIG. 5, which describes a relationship among application data, application resource files, a data snapshot, application metadata, and the like.

The application data includes a file that is to be backed up and that is obtained by scanning an application directory. The instant messaging application is used as an example. Data of the instant messaging application includes data such as a chat history, a picture, a video, audio, and a document.

The data snapshot is generated based on information about the application data, and records some information of the application data (for details, refer to Table 1 and Table 2). The data snapshot of the application A is constructed by using two tables. One table shows a local file list (see Table 1), and the other table shows a to-be-uploaded file list (see Table 2).

The local file list is used for recording information about a file (such as an application ID, a file size, a hash value, modification time, whether there is a change, and a file type) in the application data, and some information of the file (such as a local file path of the file and a local unique identifier of the file) in the electronic device.

**Table 1 shows the local file list app_data_detail provided in this embodiment of this application.**

| Field name | Type | Description |
|---|---|---|
| back_id | string | Backup ID, used for distinguishing between different backup records |
| app_id | string | Application ID |
| app_type | int | Application type, such as 1: system setting; 2: system application data; 3: third-party application data; 4: third-party application installation package; 5: virtual application; and 9: group |
| uuid | string | Local unique identifier |
| count | int | Quantity of files in a directory |
| root | string | Root node of an application, where paths of root nodes in different electronic devices may be different; |
| | | and |
| | | for example, paths of root nodes of some applications are /external: sandbox path; paths of root nodes of some applications are /sdata: system data path; and paths of root nodes of some applications are /scard: SD card path. |
| path | string | File path |
| name | string | Filename |
| node_type | int | File type, such as 1: root node; 2: apk/icon node; 5: directory; 6: regular file; 7: small file; 8: large DB file; and 9: file slice of a large DB file |
| modify_time | long | Modification time of a file, used for quickly identifying a file change |
| size | long | File size |
| hash | string | File hash value |
| reference | string | Mapping relationship between the file type and a cloud-side unique identifier in the to-be-uploaded file list, such as 1: one-to-one mapping for regular files; 2: many-to-one mapping for small files; and 3: one-to-many mapping for large files |
| data1......data10 | string | 10 extended fields are reserved |

The to-be-uploaded file list is used for recording the information about the file (such as the application ID, the file size, and the hash value) in the application data, and some information (such as a cloud-side download path and the cloud-side unique identifier) of the file in the cloud server.

**Table 2 shows the to-be-uploaded file list upload_app_data_detail provided in this embodiment of this application.**

| Field name | Type | Description |
|---|---|---|
| back_id | string | Backup ID |
| app_id | string | Application id |
| uuid | string | Local unique identifier |
| cloud_name | string | Filename rule path (hash)_filename |
| cloud_path | string | Cloud-side download path |
| cloud_fid | string | Cloud-side unique identifier fileid of a to-be-uploaded file |
| cloud_size | long | File size |
| cloud_hash | string | File hash value |
| data1......data10 | string | 10 extended fields are reserved |

The application resource files include: the data snapshot, the application installation package, the application icon, and an application backup description. The application backup description includes: information such as a version of the installation package of the application and a system version of the electronic device during backup.

The application metadata records the related information of the data snapshot, the related information of the application installation package, the related information of the application icon, related information of the application backup description, and the like.

An example of the application metadata is as follows:

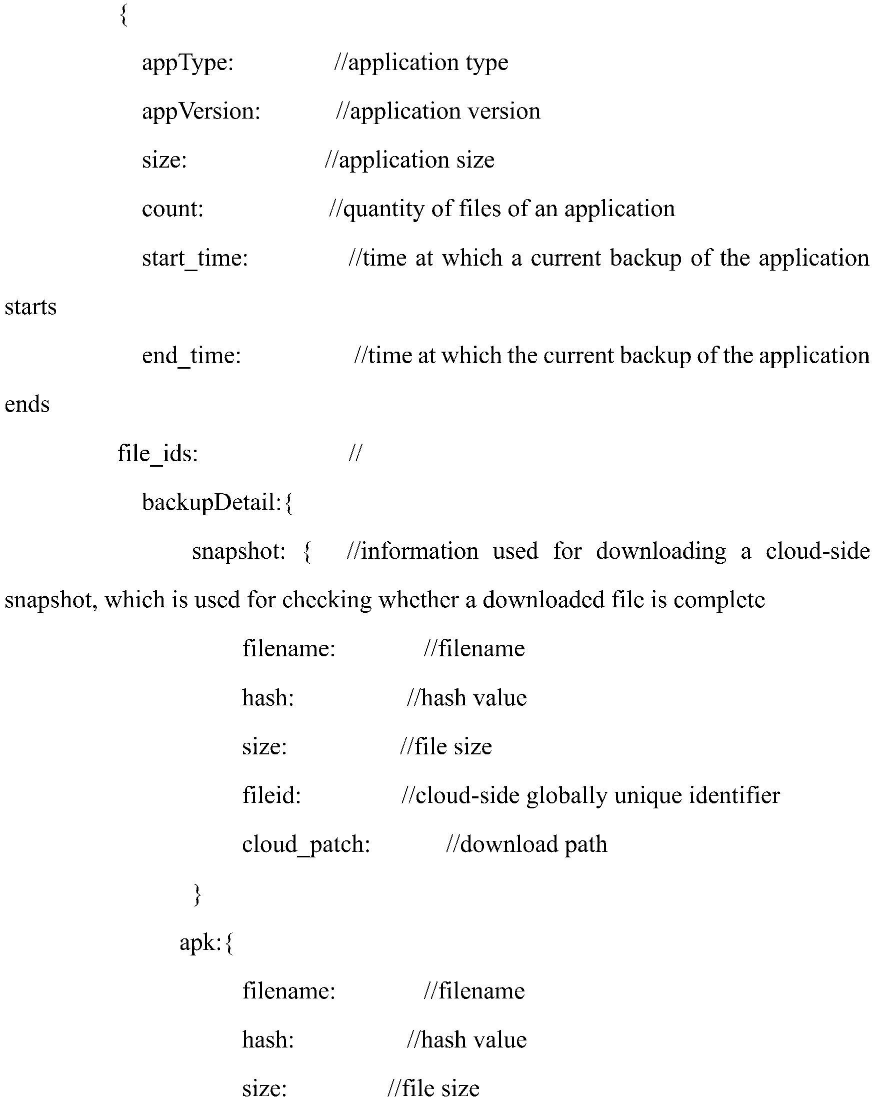

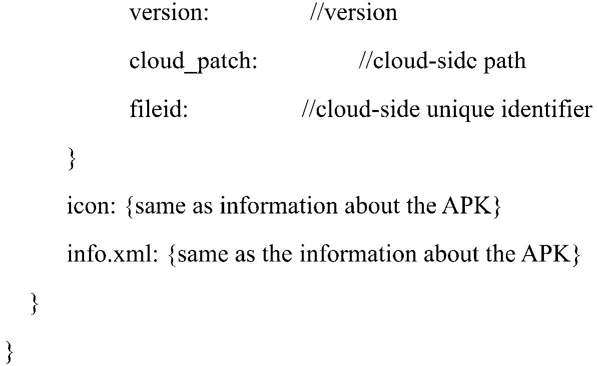

It may be understood that the application metadata includes related information of snapshot (the data snapshot), related information of apk (the application installation package), related information of info.xml (the application backup description), and related information of icon (the application icon).

After the foregoing technical terms are described, the following describes a cloud backup solution provided in embodiments of this application in detail.

As shown in FIG. 4, the cloud backup solution includes: the backup preparation phase, the data preparation stage, the data upload stage (including the application data upload stage and the application resource file upload stage), and the backup completion phase.

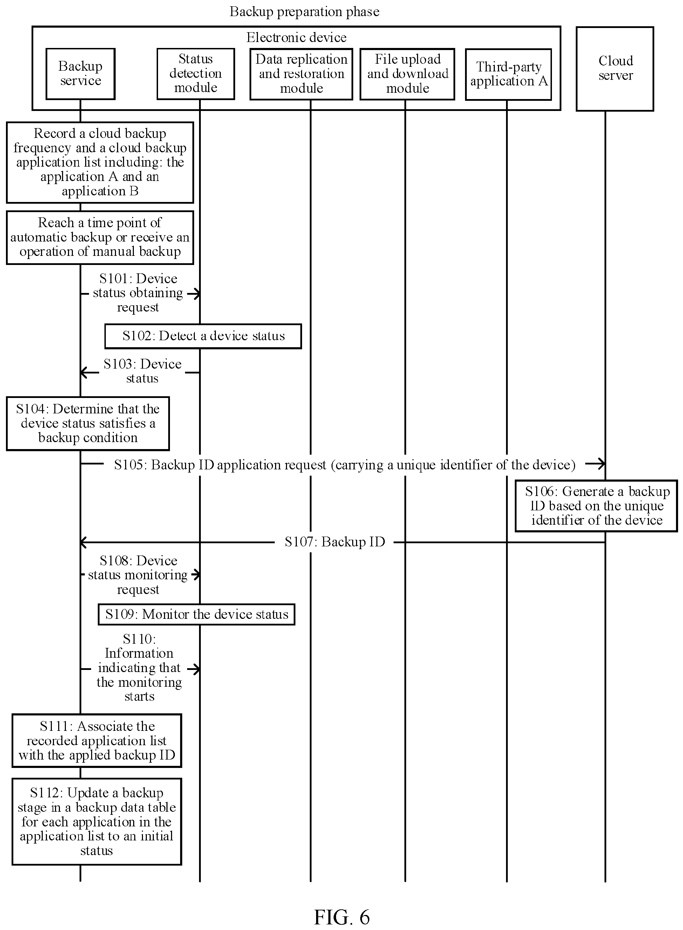

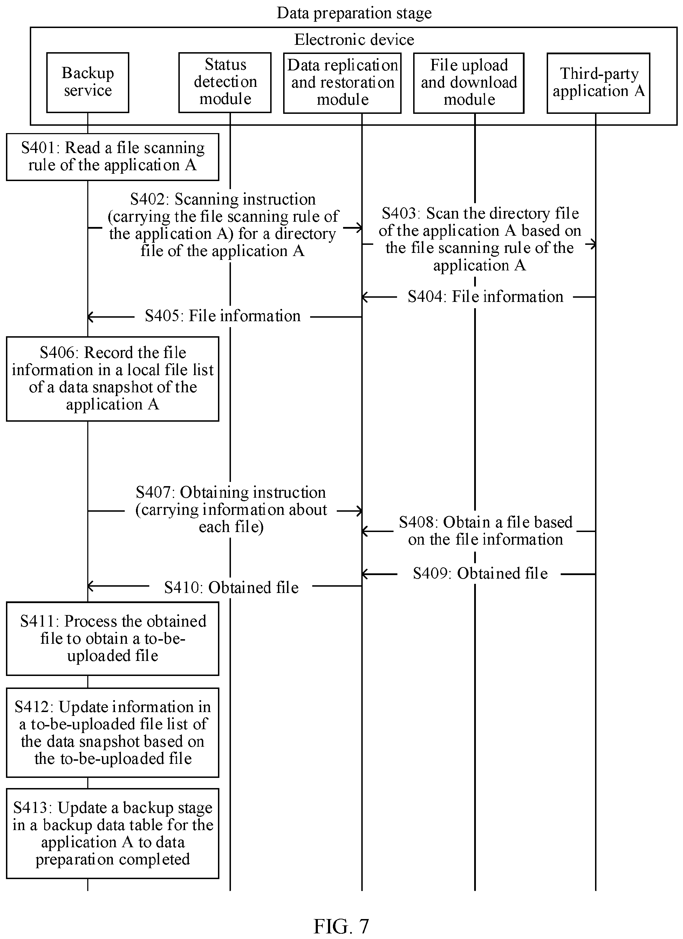

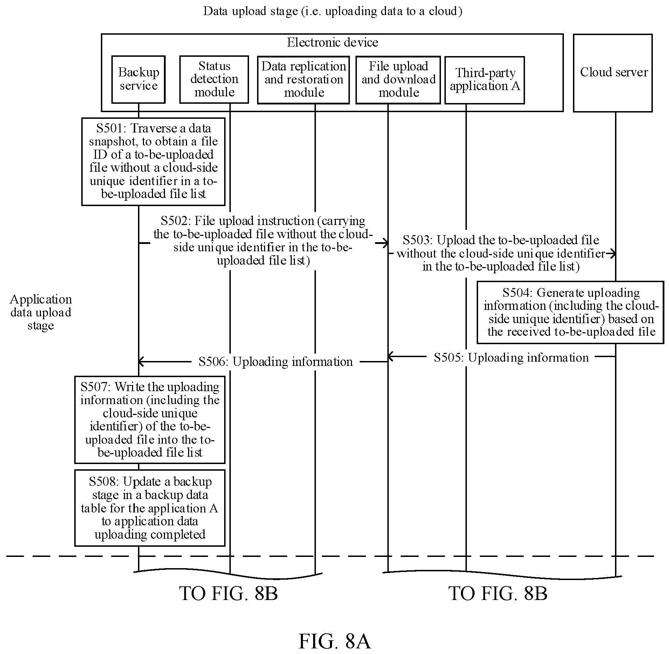

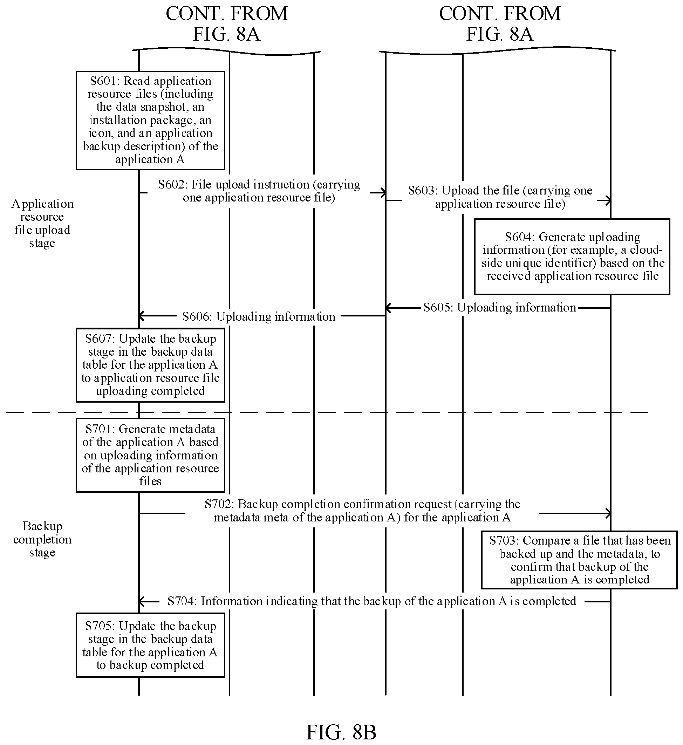

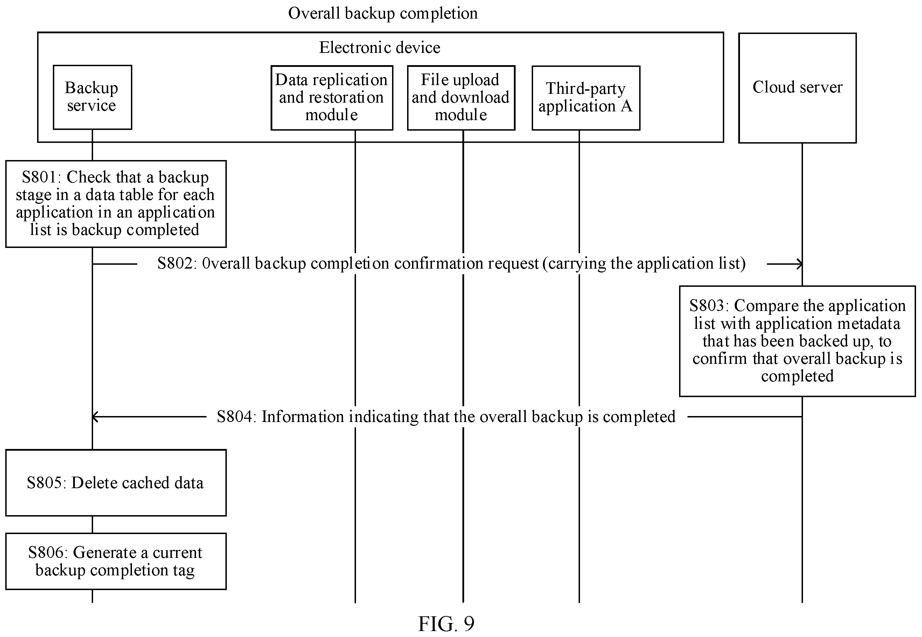

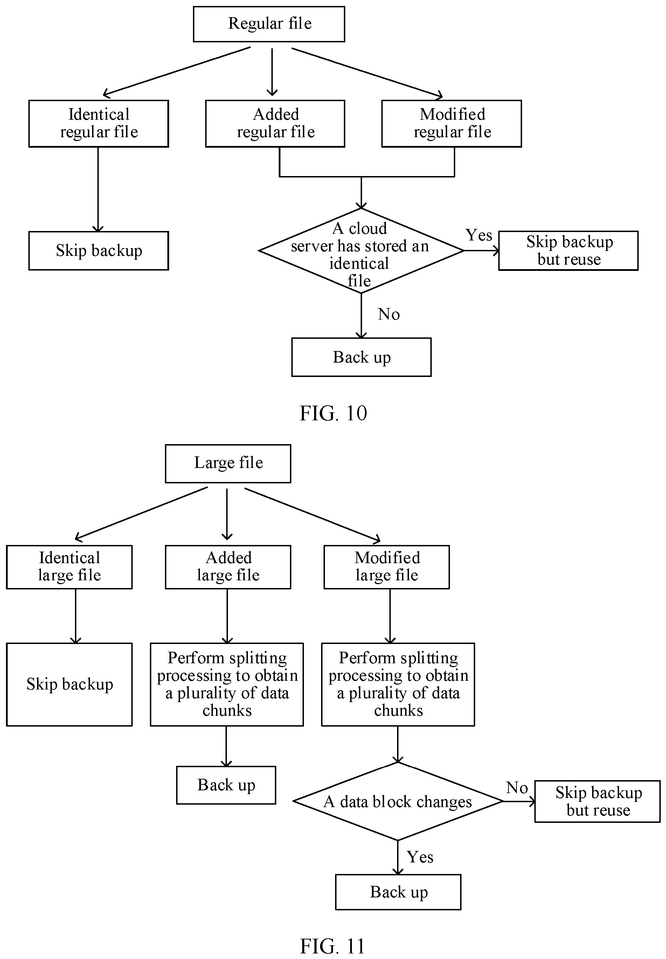

The cloud backup solution is described below with reference to FIG. 6 to FIG. 11. FIG. 6 is a sequence diagram of the backup preparation phase in the cloud backup solution. FIG. 7 and FIG. 8A and FIG. 8B are specific implementations of environment status detection in the backup preparation phase shown in FIG. 6. FIG. 9 is a sequence diagram of the data preparation stage in the cloud backup solution, FIG. 10 is a sequence diagram of the data upload stage in the cloud backup solution, and FIG. 11 is a sequence diagram of the backup completion phase in the cloud backup solution.

First, the sequence diagram of the backup preparation phase shown in FIG. 6 is described.

Refer to FIG. 2. The frequency of the automatic cloud backup and data of which applications needs to be backed up may be set by using the backup application. The backup application may generate an application list (not including an ID of notes) based on the interface shown in (b) in FIG. 2. Therefore, the backup application records the cloud backup frequency and the application list, and the application list records an application ID in the current backup. When time corresponding to the cloud backup frequency is reached, the electronic device performs a subsequent cloud backup process. Similarly, after the electronic device receives a click/tap operation on the control 11, the electronic device also performs a subsequent cloud backup process. In this embodiment of this application, the foregoing cloud backup solution is described by using the current backup of the data of the application A as an example. During specific implementation, after the backup of the application A is completed, a next application is backed up.

S101: The backup service sends an environment status obtaining request to the status detection module after a time point of automatic backup is reached or an operation of manual backup is received.

In this embodiment of this application, regardless of the manual backup or the automatic backup, the backup condition is set. The backup condition includes various statuses of the electronic device, such as a network status (connected to the wireless local area network), a battery level status (where the battery level of the electronic device is greater than 10%), and a storage space status (for example, the remaining storage space of the electronic device is greater than 5G). Certainly, during actual application, to prevent the backup process from being easily interrupted, more backup conditions may be further set. For example, remaining storage space of personal space in the cloud server may be further increased to be greater than 5G.

It should be noted that figures such as 10% and 5G are merely used as examples, and do not constitute any limitation on this application. A backup condition for the automatic backup and a backup condition for the manual backup are respectively described in detail in subsequent embodiments of this application. The various statuses in the foregoing backup condition may be obtained through the status detection module.

S102: The status detection module detects a device status after receiving a device status obtaining request.

An environment status, such as the battery level status, the screen status, the remaining storage space, or the network status of the electronic device, is related to the preset backup condition.

During actual application, In the automatic backup, the status detection module detects a plurality of environment statuses related to the backup condition for the automatic backup. In the manual backup, the status detection module detects a plurality of environment statuses related to the backup condition for the manual backup. For details, refer to descriptions in subsequent embodiments.

S103: The status detection module sends the detected environment statuses to the backup service.

For example, the device status is: The electronic device is connected to the wireless local area network, the electronic device is connected to the external power supply, the remaining storage space of the electronic device is greater than 5G (or the remaining storage space of the electronic device may be specific remaining storage space of the electronic device), or the electronic device is in the screen locked status.

S104: After receiving the environment statuses sent by the status detection module, the backup service determines that the environment statuses satisfy the backup condition.

For example, the set condition for the automatic cloud backup includes: The electronic device is connected to the wireless local area network, the electronic device is connected to the external power supply, the local remaining storage space of the electronic device is greater than a threshold, and a screen of the electronic device is locked. It may be determined that the device status received in S103 satisfies the condition for the automatic cloud backup.

During actual application, the backup service may send one environment status obtaining request to the status detection module, to indicate the status detection module to detect the environment statuses. During actual application, the backup service may alternatively send a plurality of different environment status detection instructions to the status detection module, and different environment status detection instructions correspond to different detection content. For example, a battery level status detection instruction is used for detecting the battery level status; and a screen status detection instruction is used for detecting the screen status.

S105: The backup service sends a backup ID application request to the cloud server when the device status satisfies the backup condition.

As described above, backup IDs for different devices are different. Therefore, each time a backup ID is applied for, a unique identifier of the device needs to be carried. For example, a MAC address of the device may be used as the unique identifier.

S106: The cloud server generates a backup ID of the current cloud backup based on the unique identifier of the device after receiving the backup ID application request.

During actual application, during generation of the backup ID, a backup ID in each backup performed by the same device is also different from a historical backup ID. Therefore, the backup ID may also be generated by combining another parameter, for example, time at which the current backup is performed.

S107: The cloud server sends the generated backup ID to the backup service.

S108: The backup service may further send an environment monitoring request to the status detection module in a case of determining that the device status satisfies the backup condition.

Only when the current status satisfies the automatic backup, a device status monitoring instruction is sent to the status detection module to indicate the status detection module to continue monitoring the device status. Similarly, the backup service may send one monitoring request to the status detection module, or may send a plurality of device status monitoring requests to the status detection module. Different environment monitoring requests correspond to different monitoring content.

S109: The status detection module starts to monitor the device status after receiving the device status monitoring request.

In this embodiment of this application, that the status detection module detects the device status is to obtain the current device status; and that the status detection module monitors the device status is to detect the device status in real time according to a specific time periodicity.

S110: The backup service receives information that indicates that the monitoring starts and that is sent by the status detection module.

In the foregoing embodiments, there is no strict sequence between performing step S105 by the backup service and performing step S108 by the backup service. Alternatively, the backup service may first perform step S108 and then perform step S105.

S111: The backup service establishes a correspondence between the application list and the backup ID after receiving the backup ID.

S112: The backup service updates a backup stage of each application in a backup data table to an initial status.

The cloud backup solution provided in this embodiment of this application is to perform backup based on an application level, and the backup service sequentially backs up applications in a backup list. That is, a next application is backed up only when backup of one application is completed. In this embodiment of this application, a backup data table is set for each application, and a backup stage of the application is recorded in the backup data table. Therefore, when backup is interrupted, the backup service may check the backup data table for each application in the backup list to determine which applications have been backed up (for example, a status of the backup stage is backup completed) and which applications have not been backed up (for example, a status of the backup stage is an initial status).

In addition, during actual application, backup of a specific application may be interrupted in a backup process. To continue the interrupted application backup process, a backup execution process for a single application may be further divided into several more detailed backup stages: a data preparation stage, an application data upload stage, an application resource file upload stage, and an application backup completion stage. In addition, corresponding status identifiers are set for the plurality of backup phases. For example, a status identifier indicating that the data preparation stage is completed is: 10; a status identifier indicating that application data uploading is completed is: 20; a status identifier indicating that application resource file uploading is completed is: 30; and a status identifier indicating that backup is completed is: 200. Certainly, before one application is backed up, a backup stage needs to be initialized to an initial status, where the initial status may be represented by a character "0".

After each backup phase is completed, a status identifier is updated in a backup data table for the application. When the backup is interrupted, stages of the application backup process that currently have been completed and a stage from which the backup process continues may be determined based on the status identifier recorded in the backup data table for the application. The backup data table for the application may be shown in Table 3.

**Table 3 Backup data table for the application cbk_backup_app_info**

| Field name | Type | Description |
|---|---|---|
| back_id | string | Backup ID |
| app_id | string | Application ID |
| stage | int | Backup stage, such as 0: initial status; 10: data preparation completed; 20: application data uploading completed; 30: application resource file (including a data snapshot, an installation package, an icon, and an application backup description) uploading completed; and 200: successful backup |
| status | int | Current application status, such as 0: successful, and failure error code: 101 application uninstalled, and 102 no data in the application; ... |

After step S111, the status identifier corresponding to the initial status is recorded in stage of each application in the backup data table. Subsequently, the backup service may sequentially back up, based on the recorded application list, data related to applications to the cloud server.

During actual application, one backup data table may be set for each application, or information about a plurality of applications may be recorded in a form of items in one backup data table.

In the example shown in FIG. 6, in the backup preparation phase, the backup service needs to determine, through the status detection module, whether the backup condition is currently satisfied. Similarly, in the backup process, the backup service also needs to monitor the device status through the status detection module, to interrupt the backup when the device status is not suitable for continuing the backup.

In this embodiment of this application, the backup condition that the device status needs to satisfy in the automatic backup is set; and the backup condition that the device status needs to satisfy in the manual backup is further set.

For example, the condition for the automatic cloud backup includes: The electronic device is connected to the external power supply, the screen of the electronic device is locked, the electronic device is connected to the wireless local area network, the local remaining storage space of the electronic device is greater than the threshold, the remaining storage space for the personal account is greater than a threshold, and the like. The backup condition for the manual backup includes: The electronic device is connected to the wireless local area network, the battery level of the electronic device is greater than 10%, the local remaining storage space of the electronic device is greater than the threshold, the remaining storage space for the personal account is greater than a threshold, and the like. Certainly, the foregoing are merely examples.

As shown in FIG. 6, after the backup preparation phase ends, the backup stage of each application in the data table is in the initial status. Subsequently, the backup service sequentially backs up the data of the applications to the cloud server based on the application list of the current backup. The following describes a data preparation stage in a process of backing up one of the applications (for example, the application A).

FIG. 7 is a sequence diagram of a data preparation stage in a data backup process for an application A according to an embodiment of this application.

S401: A backup service reads a file scanning rule of the application A.

In this embodiment of this application, a configuration file (json file) may record a file scanning rule of one or more applications, and the file scanning rule records a backup directory and a restricted backup directory of the application. The backup service may upload a file in the backup directory to a cloud server, and does not upload a file in the restricted backup directory to the cloud server.

During actual application, different file scanning rules may be set for different applications, a same file scanning rule may be set for applications of a same type, or a same file scanning rule may be set for all applications.

S402: The backup service sends a scanning instruction for the directory file of the application A to a data replication and restoration module, where the scanning instruction carries the file scanning rule of the application A.

For example, the scanning instruction may carry the backup directory and the restricted backup directory of the application A.

During specific implementation, the backup service may call a data replication module in the data replication and restoration module, to scan the directory of the application A through the data replication module.

In an example, sdcard/picture/xxx.xxx.xxx/ is the backup directory, and /data/data/xxx.xxx.xxx/file/b3 d74ae13647da4b7f8b259c376834/attachment/.ref/d/eda 84554-7892-4124-8f1d-7f69d38fcebd is the restricted backup directory.

S403: The data replication and restoration module obtains a quantity and file information of files in the backup directory of the application A based on the file scanning rule of the application A after receiving the scanning instruction for the directory file of the application A.

In an example of the file information, the file information includes: a file path, a filename, a file size, and a file hash value.

sdcard/picture/xxx.xxx.xxx, mmexport1699003060871.mp4, 15.32 MB, ngreht8dhge471gdtgh;

/android/data/xxx.xxx.xxx/file/e2b13889818aa6a711935f5481405139/mus ic, piecebc16b1ac66e102953d7397dccd0002e2, 3.35 MB, ithdbght246bgdg.

In this process, the data replication module in the data replication and restoration module traverses the backup directory of the application A by using a BMS or a PMS, to replicate all files in the backup directory of the application A. These files obtained by using the backup directory may also be recorded as directory files.

S404: The data replication and restoration module obtains the file information of the application A.

S405: The data replication and restoration module sends the file information to the backup service.

S406: The backup service records the file information of the application A in a local file list of a data snapshot of the application A after receiving the file information. In this step, related information of scanned application data of the application A is recorded in the local file list of the data snapshot.

An example of the local file list (an application ID, the quantity of files, the file path, the filename, the file size, and the file hash value) is as follows:
dsgrbgfd, 1, sdcard/picture/xxx.xxx.xxx, mmexport1699003060871.mp4, 15.32 MB, ngreht8dhge47lgdtgh;
dsgrbgfd, 1,/android/data/xxx.xxx.xxx/file/e2b13889818aa6a71193515481405139/music, piecebc16b1ac66e102953d7397dccd0002e2, 3.35 MB, ithdbght246bgdg.

S407: The backup service sends an obtaining instruction to the data replication and restoration module, where the obtaining instruction carries related information of each file.

The related information may be information used for finding the file, such as the file path.

S408: The data replication and restoration module obtains a file from the directory of the application A based on the file information after receiving the obtaining instruction.

The replication is merely an obtaining manner, and may alternatively be cutting during actual application. For example, to save storage space, some files in a gallery application may be cut and then uploaded to the cloud server. S409: The data replication and restoration module obtains the file of the application A.

S410: The data replication and restoration module sends the file of the application A to the backup service.

S411: The backup service processes the file of the application A after receiving the file of the application A, to obtain one or more to-be-uploaded files of the application A.

An example of the processing is as follows: A file having a large data volume may be split into small data chunks, where the small data chunks are to-be-uploaded files. Alternatively, a plurality of files having a small data volume may be packaged, where a packaged file is a to-be-uploaded file.

During actual application, packaging, splitting, or the like may alternatively be directly performed through the data replication and restoration module during replication of these files. A specific module for implementing the packaging and the splitting is not limited in this embodiment of this application.

S412: The backup service updates some basic information in a to-be-uploaded file list of the data snapshot based on the to-be-uploaded files.

For example, the application ID, a local unique identifier, the quantity of files, the file size, the hash value, and the like are written into the to-be-uploaded file list.

S413: The backup service updates a backup stage in a backup data table for the application A to data preparation completed.

For example, the backup data table sequentially records: a backup ID, the application ID, and the backup stage, i.e. fenegfhhgdg, 5ffd64w9, and 10, where fenegfhhgdg is the backup ID, 5ffd64w9 is the application ID, and 10 indicates that the data preparation stage is completed.

FIG. 8A and FIG. 8B are a sequence diagram of a data upload stage in a backup process for an application A according to an embodiment of this application. The data upload stage includes an application data upload stage, an application resource file upload stage, and a backup completion stage.

In this embodiment of this application, basic information of a generated to-be-uploaded file has been stored in a to-be-uploaded file list. After any to-be-uploaded file is backed up to a cloud server, the cloud server returns related information of the to-be-uploaded file on the cloud server, for example, a cloud-side unique identifier of the to-be-uploaded file. An electronic device writes the cloud-side unique identifier of the to-be-uploaded file into the to-be-uploaded file list. Therefore, a to-be-uploaded file without a cloud-side unique identifier may be obtained by traversing the to-be-uploaded file list, to upload each to-be-uploaded file in the to-be-uploaded file list to the cloud server.

S501: A backup service traverses the to-be-uploaded file list in a data snapshot of the application A after updating a backup stage in a backup data table for the application A to data preparation completed, to obtain a file ID of the to-be-uploaded file without the cloud-side unique identifier.

S502: The backup service sends a file upload instruction to a file upload and download module, where the file upload instruction carries the to-be-uploaded file without the cloud-side unique identifier in the to-be-uploaded file list or a cache address of the to-be-uploaded file without the cloud-side unique identifier in the to-be-uploaded file list. The file upload instruction may further carry the file ID of the to-be-uploaded file.

Alternatively, the file upload instruction may carry the file ID of the to-be-uploaded file instead of carrying the to-be-uploaded file.

The backup service may obtain the to-be-uploaded file from cache space based on the file ID, and send the to-be-uploaded file to the file upload and download module.

This process may invoke a file upload module in the file upload and download module.

S503: The file upload and download module uploads the to-be-uploaded file without the cloud-side unique identifier in the to-be-uploaded file list to the cloud server after receiving the file upload instruction.

S504: The cloud server generates uploading information after receiving the to-be-uploaded file.

The uploading information is used to update various information in the to-be-uploaded file list, for example, a unique identifier in the cloud server and/or a storage path in the cloud server.

S505: The cloud server sends the uploading information to the file upload and download module.

S506: The file upload and download module sends the uploading information to the backup service after receiving the uploading information.

S507: The backup service writes the uploading information (including the cloud-side unique identifier) of the to-be-uploaded file into the to-be-uploaded file list after receiving the uploading information.

In this step, the cloud-side unique identifier in the uploading information further needs to be written into reference of a local file list.

The process of step S501 to step S507 is cyclically performed until each to-be-uploaded file of the application A recorded in the to-be-uploaded file list is uploaded to the cloud server, and after each to-be-uploaded file of the application A recorded in the to-be-uploaded file list is uploaded to the cloud server, each to-be-uploaded file of the application A recorded in the to-be-uploaded file list has a cloud-side unique identifier.

S508: The backup service updates, after determining that each to-be-uploaded file in the to-be-uploaded file list has the cloud-side unique identifier, the backup stage in the backup data table for the application A to application data uploading completed.

For example, information about the application A recorded in the backup data table is: xxx (backup ID). xxx (application ID). 20.

S601: The backup service reads application resource files of the application A after updating the backup stage in the backup data table for the application A to application data uploading completed.

In this embodiment of this application, the application resource files of the application A include the data snapshot, an installation package, an icon, and an application backup description.

During specific implementation, one application resource file needs to be uploaded before a next application resource file is uploaded.

S602: The backup service sends a file upload instruction to the file upload and download module, where the file upload instruction carries one application resource file or a storage address of one application resource file.

S603: The file upload and download module sends the application resource file to the cloud server after receiving the file upload instruction.

S604: The cloud server generates uploading information based on the application resource file after receiving the application resource file. The uploading information further includes a unique identifier of the application resource file.

S605: The cloud server sends the uploading information of the application resource file to the file upload and download module.

S606: The file upload and download module sends the uploading information to the backup service after receiving the uploading information.

The process from step S601 to step S606 is cyclically performed until each application resource file is uploaded to the cloud server.

S607: The backup service updates, after determining that a cloud-side unique identifier of each application resource file is received, the backup stage in the backup data table for the application A to application resource file uploading completed.

In this embodiment of this application, there are a small quantity of application resource files, and each time the cloud server receives one application resource file, the cloud server also sends a cloud-side unique identifier of the application resource file to the backup service. Therefore, the backup service may determine, based on a received cloud-side unique identifier, which application resource file has been uploaded and which application resource file has not been uploaded, thereby uploading each application resource file to the cloud server.

S701: The backup service generates metadata of the application A based on uploading information of the application resource files of the application A after updating the backup stage in the backup data table for the application A to application resource file uploading completed.

S702: The backup service sends a backup completion confirmation request for the application A to the cloud server, where the request carries the metadata of the application A.

S703: The cloud server compares stored application resource files of the application A and the metadata of the application A after receiving the request, to determine that the backup of the application A is completed.

S704: The cloud server sends, to the backup service, information indicating that the backup of the application A is completed.

S705: The backup service updates the backup stage in the backup data table for the application A to backup completion after receiving the information indicating that the backup of the application A is completed that is sent by the cloud server.

After step S705, the backup of the application A in an application list is completed, and data of another application in the application list may continue to be backed up based on the data backup process for the application A. For example, data of an application B continues to be backed up by performing procedures shown in FIG. 9 and FIG. 10. If there are more applications in a current backup process, another application is also backed up to the cloud server by cyclically performing FIG. 9 and FIG. 10. Details are not described in this embodiment of this application again.

After each application in the application list is backed up, a sequence diagram of a backup completion phase shown in FIG. 9 needs to be executed.

S801: A backup service checks that a backup stage in a data table for each application in the application list is backup completion.

S802: The backup service sends an overall backup completion confirmation request to a cloud server, where the request carries the application list.

S803: The cloud server compares the received application list with stored application metadata after receiving the overall backup completion confirmation request, to confirm that overall backup is completed.

S804: The cloud server sends, to the backup service, information indicating that the overall backup is completed.

S805: The backup service deletes cached data.

The cached data deleted by the backup service may be cached application data of each application or the like. During actual application, after backup of one application is completed each time, cached data of the application may be deleted, to save cache space. Alternatively, after backup of all applications is completed, all cached data may be deleted. A specific implementation is not limited in this embodiment of this application.

S806: Generate a current backup completion tag. After S806, a current backup process ends.

In the foregoing backup process, application data to be backed up may be classified into three types: a regular file, a small file, and a large file based on file sizes.

The regular file is data with a file size ranging from 2M to 500M, for example, a database file of a system application, recorded audio, or a video.

The small file is data with a file size less than 2M, for example, a large quantity of pieces of some data generated during running of an instant messaging application.

The large file is a file with a file size greater than 500M, for example, a database file of an instant messaging application.

Certainly, the foregoing classification manner is merely used as an example. During actual application, other data sizes may alternatively be selected as a basis for distinguishing between files of different types. For example, 5M and 1G are used for distinguishing between the small file, the regular file, and the large file.

There are some differences in backup manners for files of different types. Backup manners for a regular file, a small file, and a large file are respectively described below.

FIG. 10 shows a backup manner for a regular file according to an embodiment of this application. Data in one application is used as an example.

For the regular file, files in a local file list in a current backup is compared with files in a local file list in a previous backup, and the files in the local file list in the current backup may be classified into an identical regular file, an identical regular file, and an identical regular file. In addition, there are different backup strategies for files of different types.

Identical regular file: Information about the file recorded in the local file list in the previous backup is consistent with information about the file recorded in the local file list in the current backup. For example, a file path, a file size, file modification time, a hash value, and the like of the file recorded in the local file list in the previous backup are all consistent with those of the file recorded in the local file list in the current backup. This type of identical regular file does not need to be backed up this time.

Added regular file: The added regular file is a regular file that does not exist in the local file list in the previous backup or exists in the local file list in the current backup.

Modified regular file: Among information recorded in the local file list in the previous backup and information recorded in the local file list in the current backup, some information is consistent (for example, consistent application IDs, consistent file paths, or consistent filenames), and some information is inconsistent (for example, inconsistent file modification time, inconsistent file sizes, or inconsistent file hash values).

During actual application, the added regular file and the modified regular file may alternatively exist on a cloud server. For example, a file A in a 2^{nd} backup is determined as an added regular file. In the 2^{nd} backup, the file A is uploaded to the cloud server, and then a user deletes the local file A. In a 3^{rd} backup, the file A is determined as a deleted regular file, and is not uploaded. Then, the user writes the file A into an electronic device. In a 4^{th} backup, the file A is determined as an added regular file. However, in the 4^{th} backup, the file A may no longer be backed up, and the file A is reused through the cloud server.

FIG. 11 shows a backup manner for a large file according to an embodiment of this application.

For the large file, files in a local file list in a current backup is compared with files in a local file list in a previous backup, and the files in the local file list in the current backup may be classified into an identical large file, a modified large file, and an added large file. In addition, there are different backup strategies for files of different types.

Identical large file: Information recorded in the local file list in the previous backup is consistent with information recorded in the local file list in the current backup. For example, a file path, a file size, file modification time, a hash value, and the like recorded in the local file list in the previous backup are all consistent with those recorded in the local file list in the current backup. This type of identical large file does not need to be backed up this time.

Added large file: The added large file is a large file that does not exist in the local file list in the previous backup or exists in the local file list in the current backup.

Modified large file: Among information recorded in the local file list in the previous backup and information recorded in the local file list in the current backup, some information is consistent (for example, consistent application IDs, consistent file paths, or consistent filenames), and some information is inconsistent (for example, inconsistent file modification time, inconsistent file sizes, or inconsistent file hash values).

For the foregoing process of distinguishing between the identical large file, the added large file, and the modified large file, refer to the process of distinguishing between the identical regular file, the added regular file, and the modified regular file described in the foregoing embodiment. Details are not described in this application again.

For the large file, a case in which the added large file or the modified large file has been stored on the cloud server rarely occurs. Therefore, whether the added large file or the modified large file has been stored on the cloud server is no longer considered. However, a data volume of a single large file is large, resulting in serious occupancy of network bandwidth and low backup efficiency in an uploading process, and once interruption occurs, re-uploading needs to be performed. Therefore, in this embodiment of this application, the large file is split into a plurality of data chunks, and the plurality of data chunks obtained through the splitting are respectively uploaded to the cloud server.

The added large file in the large files may be split into a plurality of data chunks, and then the plurality of data chunks are backed up.

The modified large file in the large files may also be split into a plurality of data chunks. For the identical large file, a plurality of data chunks obtained through splitting in the previous backup are compared with a plurality of data chunks obtained through splitting in the current backup. An unchanged data chunk is not backed up and reused, and a changed data chunk is backed up, thereby improving backup efficiency.

When the data chunks obtained through splitting are compared, related information of the data chunks may be compared. For example, reference in a local file list of a large file records a relationship between a plurality of data chunks corresponding to one large file. Each data chunk also has a local file list. Whether a file type is a split DB file (that is, a data chunk) is recorded in node_taye in the local file list of each data chunk. Because the data chunks also have respective corresponding local file lists, a manner for comparing whether the data chunks are completely the same may also refer to the manner for determining whether regular files are completely the same described in the foregoing embodiment. Details are not described herein again in this application.

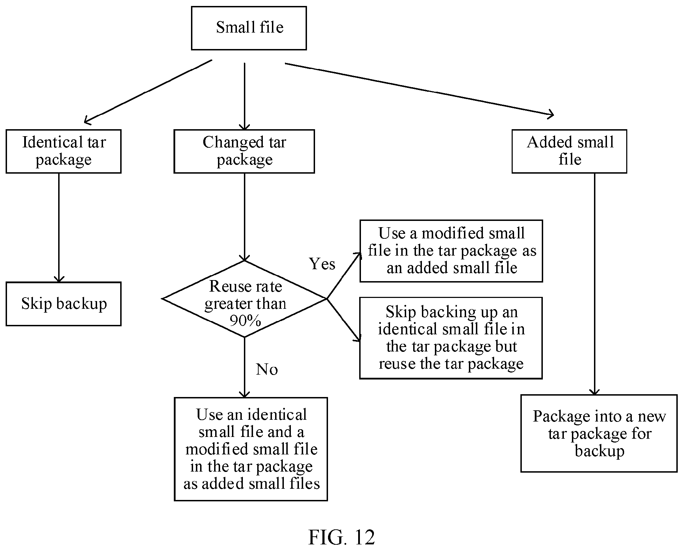

Refer to FIG. 12. A small file is backed up in a form of a tar package. Therefore, whether the small file is in an identical tar package, a modified tar package, and an added small file needs to be determined based on a tar package level. A tar package and a file in a local file list in a current backup and a tar package and a file in a local file list in a previous backup have the following relationships.

Identical tar package: Small files in the tar package in the previous backup all exist and have not been modified in the current backup. This type of tar package has been backed up to a cloud server in the previous backup, and therefore, does not need to be backed up this time.

Changed tar package: Small files in tar in the previous backup all exist, but have been modified in the current backup, or small files in tar in the previous backup partially exist in the current backup.

Added small file: The added small file is a small file that does not exist in the local file list in the previous backup or exists in the local file list in the current backup.

The identical tar package has been backed up to the cloud server in the previous backup, and therefore, does not need to be repeatedly backed up this time.

For the changed tar package, a reuse rate of the changed tar package may be checked. The changed tar package relates to three types of small files: an identical small file, a deleted small file (no backup is needed), and a modified small file.

The reuse rate is a percentage (a quantity percentage or a data volume percentage) of small files in the tar package in the previous backup that still exist in the current backup.

If the reuse rate is greater than 90%, the identical small file is not backed up, and the tar package in the previous backup is reused; and the modified small file is processed based on the processing manner for the added small file.

If the reuse rate is less than or equal to 90%, the identical small file and the modified small file in tar are processed based on the processing manner for the added small file.

The added file is packaged into a new tar package based on a package upper limit for backup.

After the processing manners for the various types of files are described, a current backup process is described in detail.

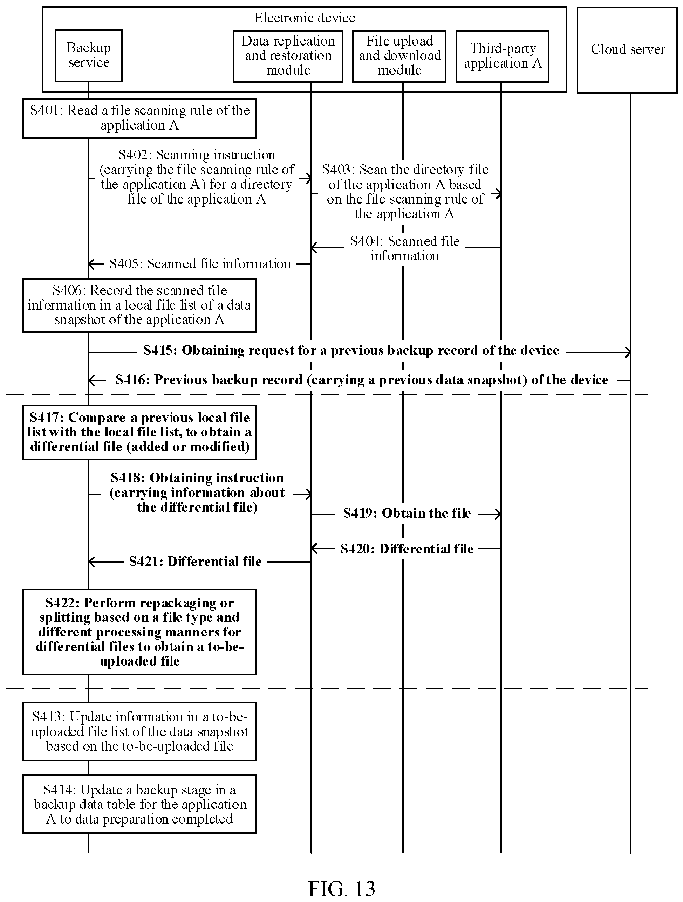

FIG. 13 is a sequence diagram of a data preparation stage in re-backup based on the data preparation stage in the initial backup shown in FIG. 7.

In a non-initial backup, after the scanned file information is recorded in the local file list of the data snapshot of the application A in S406, a local file list in a data snapshot corresponding to a current backup ID may be obtained.

S415: The backup service sends, after obtaining the local file list in the data snapshot corresponding to the current ID, an obtaining request for a previous backup record of a local device to the cloud server, where the obtaining request may carry a unique identifier of the local device.

S416: The cloud server sends the previous backup record of the local device to the backup service after receiving the obtaining request, where the backup record records a data snapshot in a previous backup.

For a regular file, S417 to S421 are performed to obtain a to-be-uploaded file. For a large file, S417 to S422 are performed to obtain a to-be-uploaded file. For a small file, S417 to S422 are performed to obtain a to-be-uploaded file.

During actual application, a to-be-uploaded file for a type of file (for example, the regular file) may be first obtained; and then, a to-be-uploaded file for a next type of file (for example, the large file) is obtained, until the to-be-uploaded file for the regular file, the to-be-uploaded file for the large file, and the to-be-uploaded file for the small file are obtained.

An example in which a to-be-uploaded file for a type of file is obtained is used: S417: Compare a previous local file list with a current local file list, to obtain a differential file (for example, added or modified).

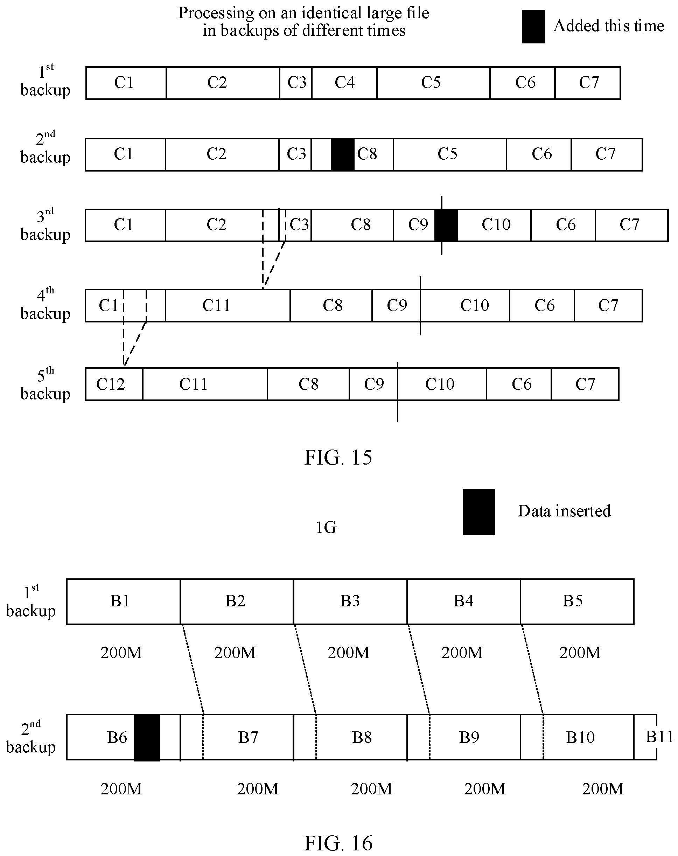

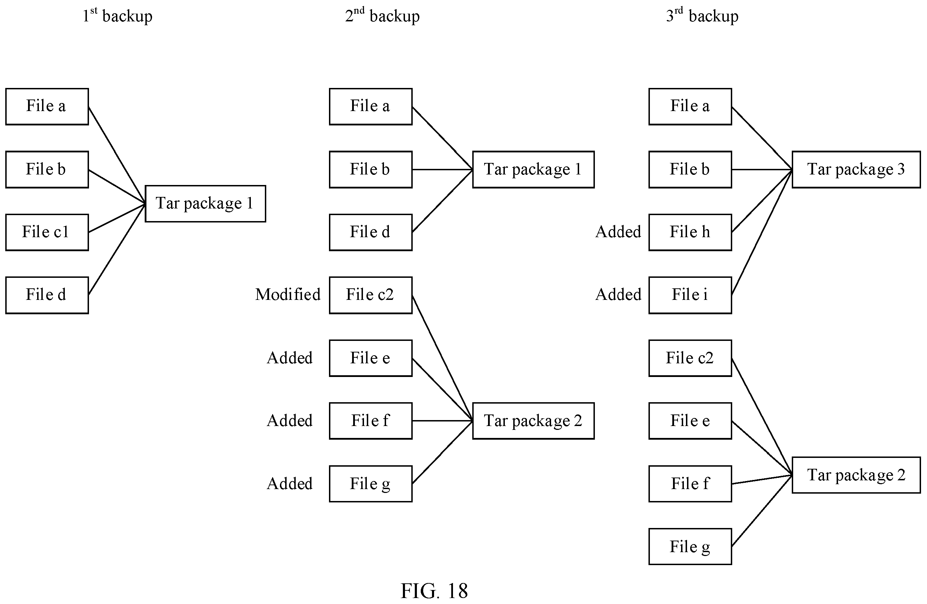

In this embodiment of this application, files in application data are classified into: a regular file, a large file, and a small file based on sizes of the files. There are different processing manners for different files. Therefore, a processing manner for the differential file needs to be determined. Refer to a chunking process shown in FIG. 15 and a packaging process shown in FIG. 18 respectively.

S418: The backup service sends an obtaining instruction (carrying information about the differential file) to the file replication and restoration module.

S419: The file replication and restoration module obtains the file based on the information about the differential file after receiving the obtaining instruction.

S420: The file replication and restoration module obtains the differential file from the third-party application.

S421: The file replication and restoration module sends the differential file to the backup service.

S422: The backup service performs repackaging or splitting based on a file type and different processing manners for differential files to obtain a to-be-uploaded file.

Subsequent steps are similar. For details, refer to the descriptions in FIG. 7. Details are not described herein again.

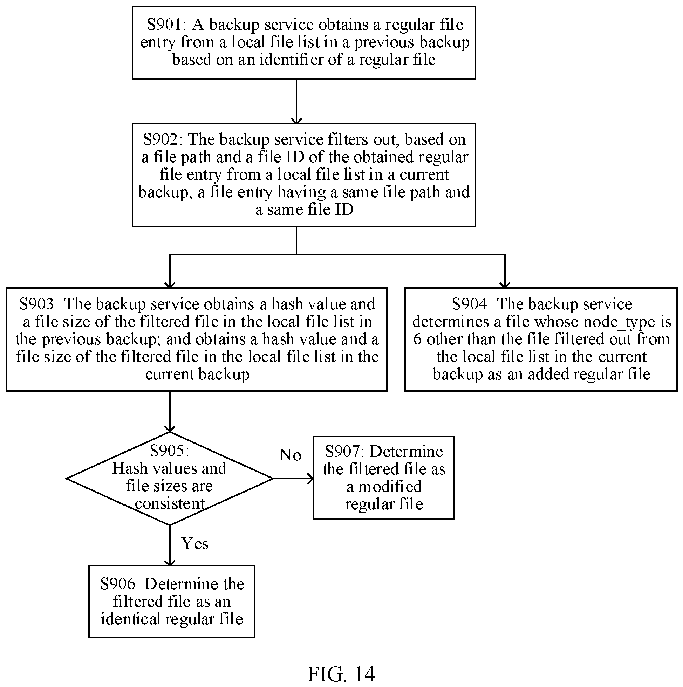

FIG. 14 is a flowchart corresponding to step 417 when the to-be-uploaded file for the regular file is obtained in FIG. 13.

S901: A backup service obtains a regular file entry from a local file list in a previous backup based on an identifier of the regular file.

The backup service checks, from the local file list in the previous backup, a file whose node_type is 6, to filter out the regular file entry.

S902: The backup service filters out, based on a file path and a file ID of the obtained regular file entry from a local file list in a current backup, a file entry having a same file path and a same file ID (a file entry of a regular file in the current backup).

S903: The backup service obtains a hash value and a file size of the filtered file in the local file list in the previous backup; and obtains a hash value and a file size of the filtered file in the local file list in the current backup.

S905: Determine whether hash values are consistent, and determine whether file sizes are consistent.

S906: Determine the filtered file as an identical regular file if the hash values and the file sizes are consistent.

S907: Determine the filtered file as a modified regular file if the hash values and/or the file sizes are inconsistent.

During actual application, after S902, the flowchart further includes:
S904: The backup service determines a file whose file type is a regular file other than the file filtered out from the local file list in the current backup as an added regular file.

As described above, when the added regular file and the modified regular file have been backed up to the cloud server in an earlier historical backup process, the electronic device does not need to perform repeated backup, thereby reducing repeated backup issues.

To clarify a backup process for a regular file, the following describes a backup process for regular files by using a specific example.

Table 4 shows an example of a process of multiple backups of regular files provided in this embodiment of this application.

**Table 4 Process of multiple backups of regular files**

| Regular file | Backup ID | Local file list | Differential file | To-be-uploaded file list | Transfer file list |
|---|---|---|---|---|---|
| 1^{st} backup | backup_record_01 | A1, B1, and C1 | | A1, B1, and C1 | A1, B1, and C1 |
| 2^{nd} backup | backup_record_02 | B1, C2, and D1 | A1 (deleted), C2 (modified), and D1 (added) | C2 and D1 | C2 and D1 |
| 3^{rd} backup | backup_record_03 | A1, B1, D1, and E1 | A1 (added), C2 (deleted), and E1 (added) | A1 and E1 | E1 |

When a local device performs an initial backup or a cloud server does not store a historical backup record of a local device, backup is performed based on backup processes shown in FIG. 6 to FIG. 11. In step S407, the obtained processing manner is not performing any processing (that is, neither splitting nor packaging is performed).

In a 1^{st} backup, a backup ID of the 1^{st} backup: backup_record_01 is obtained. The backup ID correspondingly records that a local file list 1 includes A1, B1, and C1, a corresponding to-be-uploaded file list 1 includes A1, B1, and C1, and files actually transmitted from the electronic device to the cloud server are A1, B1, and C1. It may be understood that files in a current file list, a to-be-uploaded file list, and a transfer file list in the initial backup are consistent.

In a 2^{nd} backup, a backup ID is backup_record_02, a local file list 2 generated in the 2^{nd} backup includes B1, C2, and D1, and differential files: A1, C2, and D1 are obtained by comparing the local file list 1 with the local file list 2.

A1 is a deleted file, which does not need to be backed up this time.

C2 is a modified file, which needs to be backed up again and uploaded this time.

D1 is an added file, which needs to be backed up and uploaded this time.

Therefore, in the 2^{nd} backup, a to-be-uploaded file list 2 including C2 and D1 is obtained. In this case, the local file list 2 recorded by the backup ID of the 2^{nd} backup includes B1, C2, and D1, but the recorded to-be-uploaded file list 2 includes C2 and D1, and a transfer file list includes C2 and D1.

In a 3^{rd} backup, a backup ID is backup_record_03, a local file list 3 generated in the 3^{rd} backup is A1, B1, D1, and E1, and differential files: A1, C2, and E1 are obtained by comparing the local file list 3 with the local file list 2.

A1 is an added file, and A1 is in a historical to-be-uploaded file list, and therefore, does not need to be backed up. However, an instant transfer capability or a reuse method may be used for A1.

C2 is a deleted file, which does not need to be backed up and uploaded this time.

E1 is an added file, and E1 is not in a historical to-be-uploaded file list, and therefore, needs to be backed up and uploaded.

Therefore, in the 3^{rd} backup, an obtained to-be-uploaded file list 3 includes A1 and E1, but an actual transfer file list includes E1. In this case, the local file list 3 recorded by the backup ID of the 3^{rd} backup includes A1, B1, D1, and E1, but the recorded to-be-uploaded file list 3 includes A1 and E1, and the actual transfer file list includes E1.

The foregoing process is merely an implementation for backing up the regular file, and during actual application, another implementation may alternatively be used.

For example, a local file list in a current backup is no longer compared with a local file list in a previous backup. In each backup, before each regular file in the local file list is uploaded, a file pre-creation request is first sent to the cloud server, to resolve, by using the instant transfer capability (or the reuse method), a problem that an identical regular file is repeatedly uploaded to the cloud. In this case, the local file list corresponding to a previous backup record does not need to be obtained. The local file lists do not need to be compared. The cloud server does not delete a file by mistake during file cleanup. However, many invalid file pre-creation requests may be generated, resulting in large request pressure on the cloud server. Moreover, the cloud server generates many cloud-side unique identifiers by using the instant transfer capability.

Alternatively, a local file list in a current backup may be compared with local file lists in all previous backups, to determine that a to-be-uploaded file is E1. In this case, identification of a repeated file is more accurate. However, a local file list corresponding to a backup record in each backup needs to be obtained. Moreover, complexity of comparing local file lists is high, resulting in low efficiency.

FIG. 15 shows a manner for splitting a large file according to an embodiment of this application.

To enable two splitting operations to generate many identical data chunks, chunking may be performed based on a feature of content of a file. For example, specific content in a large file may be used as an end of each data chunk. Traversal starts from a file header of the large file, and after the specific content is traversed, the specific content is used as an end of a previous data chunk for splitting, so that the large file is split into a plurality of data chunks. An example of the specific content is as follows: Four consecutive 0 bytes may be used as the specific content, that is, "0000" is traversed. In this case, "0000" is used as the end of the previous data chunk for splitting, and a next byte of "0000" is used as a start of a next data chunk, to continue the traversal.

If added content falls in a specific data chunk and the added content does not include the specific content, a start and an end of the data chunk remain unchanged, content and a size of the data chunk are changed, and another data chunk remains unchanged.

If added content falls in a specific data chunk and the added content includes the specific content, the data chunk is split at a position of the specific content, and another data chunk remains unchanged.

If deleted content is content in a specific data chunk, a start and an end of the data chunk remain unchanged, content and a size of the data chunk are changed, and another data chunk remains unchanged.

If deleted content covers a position from two data chunks are separated from each other, the two data chunks are combined into one data chunk, and another data chunk remains unchanged.

In a 1^{st} backup, the following data chunks: C1, C2, C3, C4, C5, C6, and C7 are obtained based on file content.

In a 2^{nd} backup, content is added to a file, the added content falls in the data chunk C4, and the added content does not include a specific character. Therefore, the data chunk C4 becomes larger, which is recorded as C8, and another data chunk remains unchanged. Chunking continues to be performed based on a second manner to obtain: C1, C2, C3, C8 (which is larger than original C4), C5, C6, and C7.

In a 3^{rd} backup, content is added to a file, the added content falls in C5, and the added content includes a specific character. Therefore, original C5 is split into two data chunks, which are respectively recorded as C9 and C10, and another data chunk remains unchanged. Chunking continues to be performed based on a second manner to obtain: C1, C2, C3, C8, C5 (where the added content includes the specific character, and therefore, C5 is split into C9 and C10), C6, and C7.

In a 4^{th} backup, content is deleted from a file, the deleted content covers a position from which two data chunks (C2 and C3) are separated from each other. In this case, the two data chunks (C2 and C3) are combined into one data chunk (C11), and another data chunk remains unchanged. Chunking continues to be performed based on an original manner to obtain: C1, C11 (where part of content in original C2 is merged with part of content in original C3), C8, C9, C10, C6, C7, and another data chunk remains unchanged.

In a 5^{th} backup, content is deleted from a file, and the deleted content is in a data chunk C1. In this case, the data chunk C1 becomes smaller, which is recorded as C12, and another data chunk remains unchanged. Chunking continues to be performed based on a second manner to obtain: C12 (which is smaller than C1), C11, C8, C9, C10, C6, and C7.

Certainly, after each splitting, a data chunk that is the same as a data chunk in a previous backup does not need to be backed up; and a data chunk that is different from a data chunk in a previous backup needs to be backed up.

FIG. 16 shows another manner for splitting a large file according to an embodiment of this application. The large file may be split into a plurality of data chunks based on a fixed length. For example, a 1G video is split into a plurality of data chunks: B1, B2, B3, B4, and B5 based on a length of 200M, and the plurality of data chunks obtained through the splitting are uploaded to a cloud server. However, this manner is more suitable for a case in which there is no data insertion or deletion. Refer to the 2^{nd} backup. When there is data insertion or deletion, data may be entirely offset from a modification position. Therefore, if splitting continues to be performed based on the length of 200M, a plurality of data chunks obtained through the current splitting may be: B6, B7, B8, B9, B10, and B11. Due to a front position at which data is inserted, although a size of a data chunk obtained through the current splitting is the same as that of a data chunk obtained through previous splitting, content is completely different. Therefore, in the 2^{nd} backup, the plurality of data chunks obtained through the second splitting still need to be uploaded to the cloud server.

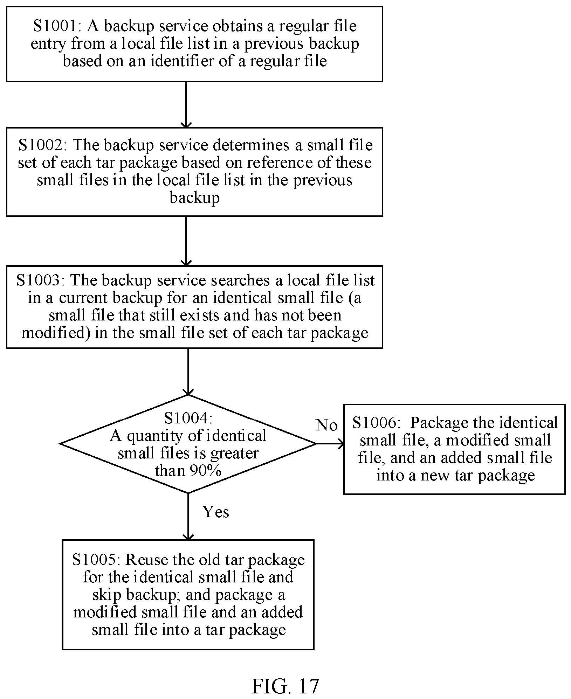

FIG. 17 shows a backup procedure for small files according to an embodiment of this application.

S1001: A backup service obtains a regular file entry from a local file list in a previous backup based on an identifier of a regular file.

S1002: The backup service determines a small file set of each tar package based on reference of these small files in the local file list in the previous backup.

S 1003: The backup service searches a local file list in a current backup for a small file that is in the small file set of each tar package and that is the same as that in the previous backup.

S1004: The backup service determines whether a quantity of identical small files in the small file set is greater than 90%.

S1005: When the quantity of identical small files in the tar package is greater than 90%, reuse the old tar package for the identical small files and skip backup; and package a modified small file and an added small file into a new tar package.

S1006: When a quantity of small files remaining in the tar package is less than or equal to 90%, package the small files remaining in the tar package and an added small file into a new tar package.

FIG. 18 shows a process of packaging small files according to an embodiment of this application.

In a 1^{st} backup, small files in a local file list include: a, b, c1, and d. The plurality of small files may be packaged into one tar package. For example, a, b, c1, and d are packaged into a tar package 1. During actual application, an upper limit of each tar package may be set, for example, may be 100M, 150M, or 200M.

In a 2^{nd} backup, small files in a local file list include a, b, c2 (a file obtained by modifying c1), d, e, f, and g. A reuse rate of the tar package 1 in the previous backup is checked. If the reuse rate of the tar package 1 is greater than 90%, the previous tar package 1 continues to be reused. To be specific, it is considered that a tar package 1 in the current backup is the same as the tar package 1 in the previous backup, and the tar package 1 is not repeatedly backed up, but the tar package 1 reused in the 2^{nd} backup includes the redundant file c1 in addition to the small files in the local file list; and c2 in the tar package 1 and other added small files e, f, and g may be packaged into a tar package 2, and the tar package 2 needs to be backed up to a cloud server. The reuse rate of the tar package 1 is: T2/T1, where T1 is a quantity (or a data size) of a, b, c1, and d in the tar package 1 in the previous backup; and T2 is a quantity (or a data size) of a, b, and d that are still in the local file list among a, b, c1, and d in the tar package 1 in the previous backup. It should be noted that in the example, the quantity 4 of the small files in the tar package 1 in the previous backup and the quantity 3 of the small files in the current backup are merely used for illustration, and do not mean that the relationship indicates a reuse rate greater than 90%. Certainly, the reuse rate of 90% is also merely used for illustration.

In the 2^{nd} backup, the tar package 1 is reused, but the small files associated with the tar package 1 in the local file list in the 2^{nd} backup are a, b, and d. Small files in a tar package 1 in the cloud server are: a, b, c1, and d. Therefore, when data in the 2^{nd} backup is downloaded from the cloud server after the 2^{nd} backup to restore data corresponding to a time node of the 2^{nd} backup, a downloaded tar package 1 includes a, b, c1, and d. However, the small files associated with the tar package 1 in the local file list in the 2^{nd} backup are a, b, and d. In this case, when the data is restored, local file lists may be compared, to delete the downloaded file c1.

In a 3^{rd} backup, small files include a, b, h, i, c2, e, f, and g. A reuse rate of the tar package 1 in the previous backup is checked. If the reuse rate of the tar package 1 is less than 90%, a, b, and the added h and i in the tar package 1 are packaged into a new tar package 3. The tar package 3 is uploaded and backed up. If a reuse rate of the tar package 2 in the previous backup is greater than 90% (actually 100%), the tar package 2 continues to be reused, and the tar package 2 is not repeatedly backed up.

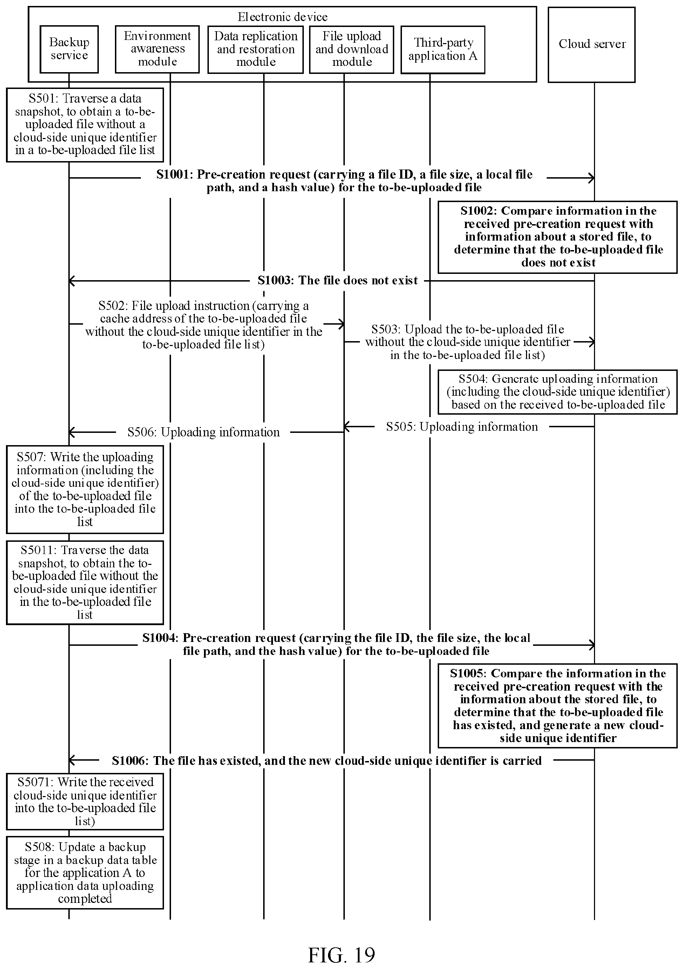

FIG. 19 shows a process in which a cloud server reuses this type of regular file having existed on the cloud server. Implementation of the process requires that the cloud server has an instant transfer capability for a file (that is, has a pre-creation interface for a file), where the file is a regular file.

In the sequence diagram, a step of pre-creating a to-be-uploaded file is added to the process of cyclically performing step S501 to step S507 at the application data upload stage shown in FIG. 8A and FIG. 8B. The to-be-uploaded file in this step may be D1 in the 2^{nd} backup among the foregoing examples of regular files. After S501 of traversing a data snapshot, to obtain a to-be-uploaded file without a cloud-side unique identifier in a to-be-uploaded file list, the process further includes:
S1001: A backup service sends a pre-creation request for the to-be-uploaded file to the cloud server, where the request carries a file ID, a file size, a local file path, and a hash value of the to-be-uploaded file.
S1002: The cloud server compares received information with information about a stored file after receiving the pre-creation request for the to-be-uploaded file, to determine that the to-be-uploaded file does not exist.
S1003: A backup server sends, to the backup service, a response indicating that the file does not exist.
S502: The backup service performs subsequent steps S502 to S507 in a case of determining that the to-be-uploaded file does not exist on the cloud server.

In another example, the cloud server may store another to-be-uploaded file, and the to-be-uploaded file in this step may be A1 in the 3^{rd} backup among the foregoing examples of regular files. After the cyclically performed step S5011 of traversing the data snapshot to obtain the to-be-uploaded file without the cloud-side unique identifier in the to-be-uploaded file list, the process further includes:
S1004: The backup service sends a pre-creation request for the to-be-uploaded file to the cloud server, where the request carries a file ID, a file size, a local file path, and a hash value of the to-be-uploaded file.
S1005: The cloud server compares received information with information about a stored file after receiving the pre-creation request for the to-be-uploaded file, to determine that the to-be-uploaded file has existed, and generates a new cloud-side unique identifier of the to-be-uploaded file.
S 1006: The backup server sends, to the backup service, a response indicating that the file exists, where the response carries the new cloud-side unique identifier.

In a case of determining that the to-be-uploaded file exists on the cloud server, the backup service no longer performs a step of uploading the file, but performs S5071 and a subsequent step.

During actual application, the cloud server may not have the instant transfer capability (that is, does not have the pre-creation interface for the file). In this case, the backup service needs to send a file reuse request to the cloud server. Other steps are similar to those in FIG. 14. Details are not described herein again.

It may be understood from the foregoing descriptions that, in this embodiment of this application, a large file is split into a plurality of data chunks, and small files are packaged into a tar package, so that a quantity of requests to the cloud server can be reduced. Identical files among these files (including the data chunks and the tar package) in two consecutive backups are no longer backed up, so that backup efficiency can be improved.

When an application installation package is backed up, a plurality of electronic devices may back up an installation package of a same application, and a same electronic device may also back up a same application installation package when performing multiple backups. To avoid a waste of storage space in a cloud server and improve backup efficiency and restoration efficiency, an installation package having existed on an application market or the cloud server may no longer be backed up.

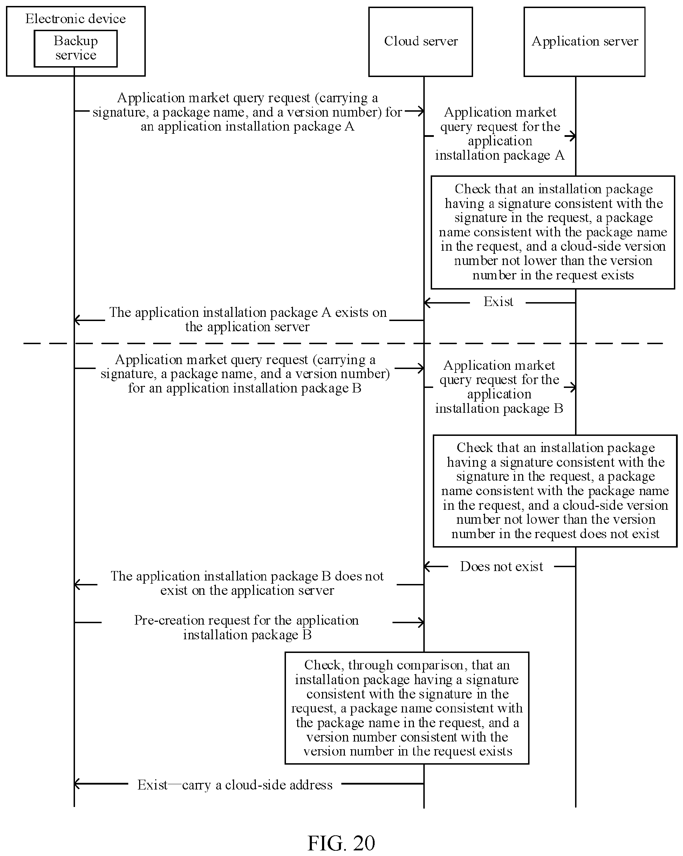

FIG. 20 shows a process of backing up an installation package A and an installation package B.

In a process of backing up an application A, a backup service sends an application market query request for the application installation package A to a cloud server, where the query request carries a signature, a package name, and a version number.

After receiving the query request, the cloud server sends the application market query request for the application installation package A to an application server, where the query request carries the signature, the package name, and the version number.

The application server checks, after receiving the query request, that an installation package having a signature consistent with the signature in the request, a package name consistent with the package name in the request, and a cloud-side version number not lower than the version number in the request exists on the cloud server.

The application server sends, to the cloud server, information indicating that the application installation package A exists.

After receiving the information indicating that the application installation package A exists, the cloud server sends, to the backup service, the information indicating that the application installation package A exists.

After receiving the information indicating that the application installation package A exists in the application market, the backup service no longer backs up the application installation package A.

In another example, in a process of backing up an application B, the backup service performs step S**, and sends an application market query request for the application installation package B to the cloud server, where the query request carries a signature, a package name, and a version number.

After receiving the query request, the cloud server sends the application market query request for the application installation package B to the application server, where the query request carries the signature, the package name, and the version number.

The application server checks, after receiving the query request, that an installation package having a signature consistent with the signature in the request, a package name consistent with the package name in the request, and a cloud-side version number not lower than the version number in the request does not exist on the cloud server.

The application server sends, to the cloud server, information indicating that the application installation package B does not exist.

After receiving the information indicating that the application installation package B does not exist, the cloud server sends, to the backup service, the information indicating that the application installation package B does not exist.

After receiving the information indicating that the application installation package B does not exist in the application market, the backup service sends a pre-creation request for the application installation package B to the cloud server.

After receiving the pre-creation request for the application installation package B, the backup service checks, through comparison, that an installation package having a signature consistent with the signature in the request, a package name consistent with the package name in the request, and a version number consistent with the version number in the request exists.

The cloud server sends, to the backup service, information indicating that the application installation package B exists, where the information carries a cloud-side address of the application installation package B.

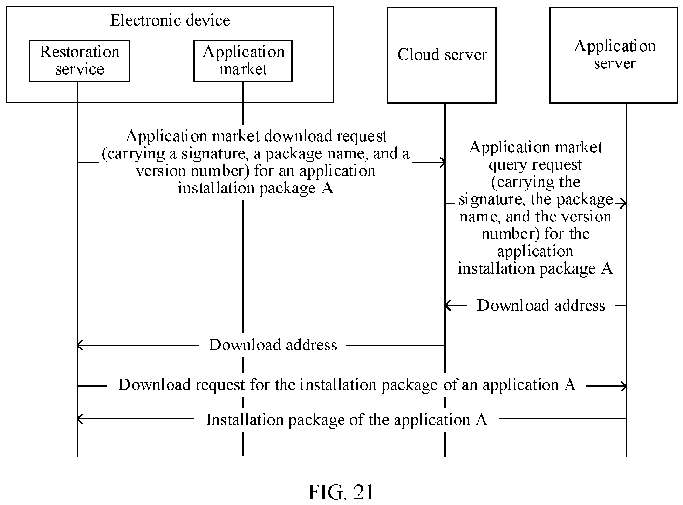

Refer to FIG. 21. A restoration process is described below by using an application market for an application installation package A as an example.

In a process of restoring an application A, if it is found through query that application resource files backed up do not include the installation package, a restoration service sends an application market download request (including a signature, a package name, and a version number) for the application installation package A to a cloud server.

After receiving the application market download request (including the signature, the package name, and the version number) for the application installation package A, the cloud server sends the application market download request (including the signature, the package name, and the version number) for the application installation package A to an application server. After receiving the download request, the application server sends a download address of the application installation package A to the cloud server.

After receiving the download address of the application installation package A, the cloud server sends the download address of the application installation package A to the restoration service.

The restoration service sends a download request for the application installation package A to the application server based on the download address.

The application server sends the installation package of the application A to a backup service based on the download request.

At a restoration stage, if application resource files backed up to the cloud server include the installation package, the application resource files (including the application installation package) are downloaded sequentially from the cloud server when the installation package is restored. Therefore, details are not described again in this application. For details, refer to the foregoing descriptions.

It should be understood that sequence numbers of the steps in the foregoing embodiments do not mean execution sequences. The execution sequences of the processes should be determined based on functions and internal logic of the processes, and should not be construed as any limitation on the implementation processes of embodiments of this application.

An embodiment of this application further provides a computer-readable storage medium. The computer-readable storage medium stores a computer program. The computer program may implement the steps in the foregoing method embodiments when run on an electronic device.

An embodiment of this application further provides a computer program product. When the computer program product runs on an electronic device or a wireless router, the electronic device is enabled to implement the steps in the foregoing method embodiments.

When an integrated unit is implemented in a form of a software functional unit and sold or used as an independent product, the integrated unit may be stored in a computer-readable storage medium. Based on this understanding, in this application, all or some of the procedures in the methods in the foregoing embodiments may be implemented by using a computer program instructing relevant hardware. The computer program may be stored in a computer-readable storage medium. When the computer program is executed by a processor, the steps in the foregoing method embodiments may be implemented. The computer program includes computer program code. The computer program code may be in a source code form, an object code form, an executable file, some intermediate forms, or the like. The computer-readable medium may include at least: any entity or apparatus capable of carrying the computer program code to a first device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disk. In some jurisdictions, according to legislation and patent practice, the computer-readable medium may not be an electrical carrier signal or a telecommunication signal.

An embodiment of this application provides a chip. The chip includes a processor, the processor is coupled to a memory, and the processor invokes a computer program stored in the memory, to implement the steps in any one of the method embodiments of this application. The chip may be a single chip or a chip module including a plurality of chips.

In the foregoing embodiments, the descriptions of the various embodiments have their respective focuses. For a part that is not described in detail or recorded in an embodiment, refer to related descriptions in other embodiments.

A person of ordinary skill in the art may be aware that the exemplary units and method steps described with reference to embodiments disclosed in this specification can be implemented in electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

The foregoing embodiments are merely intended for describing the technical solutions of this application, but not for limiting this application. Although this application is described in detail with reference to the foregoing embodiments, a person of ordinary skill in the art should understand that modifications may still be made to the technical solutions recorded in the foregoing embodiments or equivalent replacements may be made to some technical features thereof. Such modifications or replacements shall fall within the protection scope of this application as long as the modifications or replacements do not cause the essence of corresponding technical solutions to depart from the spirit and scope of the technical solutions of embodiments of this application.

## Claims

1. A data backup method, comprising:
generating, by an electronic device, a first file list based on attribute information of a directory file in a current backup;
obtaining, by the electronic device, a second file list in a previous backup, wherein the second file list comprises the attribute information of the directory file in the previous backup;
obtaining, by the electronic device, a synchronization type of differential files in the directory file based on the first file list and the second file list, wherein the synchronization type comprises: added and/or modified; and
sending, by the electronic device, the differential files to a cloud server.

2. The method according to claim 1, wherein the attribute information comprises a file type, and the file type comprises a large file type; and the obtaining, by the electronic device, a synchronization type of differential files in the directory file based on the first file list and the second file list comprises:
searching, by the electronic device, the second file list for a first large file whose file type is the large file type;
for each first large file, if the electronic device finds, in the first file list, a second large file that has same first attribute information but different second attribute information compared to the first large file, determining a synchronization type of the second large file as modified;
for each first large file, if the electronic device finds, in the first file list, a third large file that has same first attribute information and same second attribute information compared to the first large file, determining a synchronization type of the third large file as identical; and
determining, by the electronic device, a synchronization type of a fourth large file in the first file list as added, wherein the synchronization type is a synchronization type other than modified and identical, the differential files comprise a modified large file and an added large file, the modified large file is a large file whose synchronization type is modified, and the added large file is a large file whose synchronization type is added.

3. The method according to claim 2, wherein the first attribute information comprises a file ID and a file path; and the second attribute information comprises a hash value.

4. The method according to claim 2, wherein the differential files comprise an added large file, and the sending, by the electronic device, the differential files to a cloud server comprises:
splitting, by the electronic device, the added large file, to obtain a plurality of data chunks of the added large file; and
sending, by the electronic device, the plurality of data chunks of the added large file to the cloud server.

5. The method according to any one of claims 2 to 4, wherein the differential files comprise a modified large file, and the sending, by the electronic device, the differential files to a cloud server comprises:
splitting, by the electronic device, the modified large file, to obtain a first set comprising a plurality of first data chunks;
obtaining, by the electronic device from the second file list, a fifth large file that has same first attribute information compared to the modified large file, wherein the first large file comprises the fifth large file;
obtaining, by the electronic device from the second file list, a second set comprising a plurality of second data chunks of the fifth large file;
comparing, by the electronic device, the first data chunks in the first set with the second data chunks in the second set, to obtain differential data chunks of the modified large file, wherein the differential data chunks comprise a modified data chunk and an added data chunk; and
sending, by the electronic device, the differential data chunks of the modified large file to the cloud server.

6. The method according to claim 5, wherein the splitting, by the electronic device, the modified large file, to obtain a first set comprising a plurality of first data chunks comprises:
searching, by the electronic device, for a specific character in the modified large file; and
splitting, by the electronic device, the modified large file at a position corresponding to the specific character, to obtain the first set comprising the plurality of first data chunks.

7. The method according to any one of claims 1 to 6, wherein the attribute information comprises a file type, the file type comprises a small file type, and the attribute information further comprises a tar package in which each small file is located; and
the comparing, by the electronic device, the first file list with the second file list, to obtain a synchronization type of differential files in the directory file comprises:
comparing, by the electronic device, the first file list with the second file list, to obtain a changed tar package and a first added small file;
calculating, by the electronic device, a reuse rate of small files in the changed tar package;
for a first changed tar package whose reuse rate is greater than a reuse threshold, using a small file that is not reused in the first changed tar package as a second added small file; and
for a second changed tar package whose reuse rate is less than or equal to the reuse threshold, using a reused small file and a modified small file in the second changed tar package as a third added small file, wherein
the differential files comprise the first added small file, the second added small file, and the third added small file.

8. The method according to claim 7, wherein the sending, by the electronic device, the differential files to a cloud server comprises:
packaging, by the electronic device, the first added small file, the second added small file, and the third added small file into at least one new tar package according to a packaging rule; and
sending, by the electronic device, the new tar package to the cloud server, wherein a data volume of the new tar package is less than a data volume threshold.

9. The method according to claim 7, wherein a quantity of the small files in the changed tar package in the second file list is a first quantity; and a quantity of reused small files in the first file list is a second quantity; and
the reuse rate of the small files in the changed tar package is a ratio of the second quantity to the first quantity.

10. The method according to claim 7, wherein a data volume of the small files in the changed tar package in the second file list is a first data volume; and a data volume of a first small file that is reused in the first file list is a second data volume; and
the reuse rate of the small files in the changed tar package is a ratio of the second data volume to the first data volume.

11. The method according to claim 9 or 10, wherein first small files that are reused are small files having same first attribute information and same second attribute information, small files that are not reused are small files having same first attribute information but different second attribute information, the first attribute information comprises: a filename and the file path, and the second attribute information comprises the hash value.

12. The method according to any one of claims 1 to 11, wherein the attribute information comprises a file type, and the file type comprises a regular file type; and the comparing, by the electronic device, the first file list with the second file list, to obtain a synchronization type of differential files in the directory file comprises:
searching, by the electronic device, the second file list for a first regular file whose file type is the regular file type;
for each first regular file, if the electronic device finds, in the first file list, a second regular file that has same first attribute information but different second attribute information compared to the first regular file, determining the second regular file as a modified regular file;
for each first regular file, if the electronic device finds, in the first file list, a third regular file that has same first attribute information and same second attribute information compared to the first regular file, determining the third regular file as an identical regular file; and
determining, by the electronic device, a synchronization type of a fourth regular file in the first file list as added, wherein the synchronization type is a synchronization type other than modified and identical, the differential files comprise a modified regular file and an added regular file, the modified regular file is a regular file whose synchronization type is modified, and the added regular file is a regular file whose synchronization type is added.

13. The method according to claim 12, wherein the sending, by the electronic device, the differential files to a cloud server comprises:
sending, by the electronic device, a creation request for a first file to the cloud server, wherein the creation request for the first file indicates the cloud server to: return a cloud-side unique identifier of the first file when the cloud server stores the first file, or return information indicating absence of the first file when the cloud server does not store the first file; and the first file is the modified regular file or the added regular file;
sending the first file to the cloud server if the electronic device receives the information indicating the absence of the first file that is sent by the cloud server; and
skipping sending the first file to the cloud server if the electronic device receives the cloud-side unique identifier of the first file that is sent by the cloud server.

14. An electronic device, wherein the electronic device comprises a processor, and the processor is configured to invoke a computer program in a memory, to perform the method according to any one of claims 1 to 13.

15. A computer-readable storage medium, wherein the computer-readable storage medium stores computer instructions, and when the computer instructions are run on an electronic device, the electronic device is enabled to perform the method according to any one of claims 1 to 13.

16. A chip, wherein the chip comprises a processor, and the processor is configured to invoke a computer program in a memory, to perform the method according to any one of claims 1 to 13.
